# EUROPEAN PATENT APPLICATION

(11) **EP 4 679 732 A1**
(43) Date of publication of application: **14.01.2026**
(21) Application number: 23926282.7
(22) Date of filing: 08.03.2023
(51) Int. Cl.: H04B 10/27

(54) **OPTICAL TRANSMISSION SYSTEM, CONTROL DEVICE, AND CONTROL METHOD**

(71) Applicant: NTT, Inc., Tokyo 100-8116 (JP)
(72) Inventor: KITAMURA Kei, Musashino-shi, Tokyo 180-8585 (JP); MASUDA Akira, Musashino-shi, Tokyo 180-8585 (JP); TANIGUCHI Hiroki, Musashino-shi, Tokyo 180-8585 (JP); SONE Yoshiaki, Musashino-shi, Tokyo 180-8585 (JP); NISHIZAWA Hideki, Musashino-shi, Tokyo 180-8585 (JP); ANAZAWA Kazuya, Musashino-shi, Tokyo 180-8585 (JP); MANO Toru, Musashino-shi, Tokyo 180-8585 (JP)
(74) Representative: Santarelli
(86) International application number: PCT/JP2023/008782
(87) International publication number: WO 2024/185069

(57) **Abstract**

Provided an optical transmission system in which at least one node device of a plurality of node devices includes one or more filters that perform filter processing on an optical signal, and a control unit that adjusts a setting of one or more filters in response to an instruction transmitted from the control device, and the control device includes a transmission line design unit that specifies a first transmission mode to be used for communication of a user-side optical communication device in response to a request in connection request data or an instruction of an operator, calculates the setting of at least the one or more filters included in the at least one node device of the plurality of node devices in a case where the specified first transmission mode does not satisfy the request in the connection request data or a higher request condition than the request in the connection request data, and notifies the at least one node device of the plurality of node devices of node control information including the calculated setting of the one or more filters.

## Description

### Technical Field

The present invention relates to an optical transmission system, a control device, and a control method.

### Background Art

With respect to an increase in communication traffic in data center interconnect (DCI), a method of constructing an end-to-end optical path with a transponder located outside a carrier network has been studied. There is a demand for a technology for automatically setting an optical path in an optimum transmission mode since the number of transmission modes of devices that perform communication on the optical path increases and it takes much time to perform transmission design. **In** the related art, a method for optimizing the optical path setting of the transponder has been studied **in** order to set the optimal optical path. However, in a case where a more optimal optical path is set from end to end, it is also necessary to optimize the transmission line. Patent Literature 1 and Non Patent Literature 1 describe contents related to optimization of a node device disposed in a carrier network. For example, Patent Literature 1 describes a method for improving frequency utilization efficiency by changing a modulation format and changing a filter width in an optical network (transponder of an optical node).

### Citation List

### Patent Literature

Patent Literature 1: WO 2011/030897 A

### Non Patent Literature

Non Patent Literature 1: Nicola Sambo, Gianluca Meloni, Francesco Paolucci, Filippo Cugini, Marco Secondini, Francesco Fresi, Luca Poti, and Piero Castoldi, "Programmable Transponder, Code and Differentiated Filter Configuration in Elastic Optical Networks", JOURNAL OF LIGHTWAVE TECHNOLOGY, VOL. 32, NO. 11, JUNE 1, 2014.

### Summary of Invention

### Technical Problem

As described above, in the related art, a method for optimizing the transponder or the like in the carrier network has been realized, but a method for realizing optimization of an end-to-end transmission line including the transponder located outside the carrier network has not been realized.

In view of the above circumstances, an object of the present invention is to provide a technology capable of optimizing the setting of a node device through which an optical path passes at the time of setting an end-to-end optical path including a transponder located outside a carrier network.

### Solution to Problem

According to an aspect of the present invention, there is provided an optical transmission system including: a plurality of node devices provided in a carrier network; a control device that controls the plurality of node devices; a user-side optical communication device provided outside the carrier network; a first optical transmission line that connects the user-side optical communication device and at least one node device of the plurality of node devices; and a second optical transmission line that connects the plurality of node devices, in which the at least one node device of the plurality of node devices includes one or more filters that perform filter processing on an optical signal, and a control unit that adjusts a setting of the one or more filters in response to an instruction transmitted from the control device, and the control device includes a transmission line design unit that specifies a first transmission mode to be used for communication of the user-side optical communication device in response to a request in connection request data or an instruction of an operator, calculates the setting of at least the one or more filters included in the at least one node device of the plurality of node devices in a case where the specified first transmission mode does not satisfy the request in the connection request data or a higher request condition than the request in the connection request data, and notifies the at least one node device of the plurality of node devices of node control information including the calculated setting of the one or more filters.

According to another aspect of the present invention, there is provided a control device in an optical transmission system including a plurality of node devices provided in a carrier network, the control device that controls the plurality of node devices, a user-side optical communication device provided outside the carrier network, a first optical transmission line that connects the user-side optical communication device and at least one node device of the plurality of node devices, and a second optical transmission line that connects the plurality of node devices, the control device including a transmission line design unit that specifies a first transmission mode to be used for communication of the user-side optical communication device in response to a request in connection request data or an instruction of an operator, calculates a setting of at least the one or more filters included in the at least one node device of the plurality of node devices in a case where the specified first transmission mode does not satisfy the request in the connection request data or a higher request condition than the request in the connection request data, and notifies the at least one node device of the plurality of node devices of node control information including the calculated setting of the one or more filters.

According to still another aspect of the present invention, there is a control method in an optical transmission system including a plurality of node devices provided in a carrier network, a control device that controls the plurality of node devices, a user-side optical communication device provided outside the carrier network, a first optical transmission line that connects the user-side optical communication device and at least one node device of the plurality of node devices, and a second optical transmission line that connects the plurality of node devices, the control method including: by the at least one node device of the plurality of node devices, adjusting a setting of one or more filters that perform filter processing on an optical signal in response to an instruction transmitted from the control device; and by the control device, specifying a first transmission mode to be used for communication of the user-side optical communication device in response to a request in connection request data or an instruction of an operator, calculating the setting of at least the one or more filters included in the at least one node device of the plurality of node devices in a case where the specified first transmission mode does not satisfy the request in the connection request data or a higher request condition than the request in the connection request data, and notifying the at least one node device of the plurality of node devices of node control information including the calculated setting of the one or more filters.

### Advantageous Effects of Invention

According to the present invention, at the time of setting an end-to-end optical path including the transponder located outside the carrier network, it is possible to optimize the setting of the node device through which the optical path passes.

### Brief Description of Drawings

[Fig. 1] A block diagram illustrating a configuration of an optical transmission system according to a first embodiment.
[Fig. 2] A diagram illustrating an example of a format of setting information transmitted by an operation device according to the first embodiment.
[Fig. 3] A sequence diagram illustrating a flow of processing performed by an optical transmission system (first one) according to the first embodiment.
[Fig. 4] A sequence diagram illustrating a flow of processing performed by an optical transmission system (second one) according to the first embodiment.
[Fig. 5] A sequence diagram illustrating a flow of processing performed by an optical transmission system (second one) according to the first embodiment.
[Fig. 6] A sequence diagram illustrating a flow of processing performed by an optical transmission system according to a second embodiment.
[Fig. 7] A sequence diagram illustrating a flow of processing performed by an optical transmission system according to the second embodiment.
[Fig. 8] A block diagram illustrating a configuration of an optical transmission system according to a third embodiment.
[Fig. 9] A sequence diagram illustrating a flow of processing performed by an optical transmission system (first one) according to the third embodiment.
[Fig. 10] A sequence diagram illustrating a flow of processing performed by an optical transmission system (second one) according to the third embodiment.

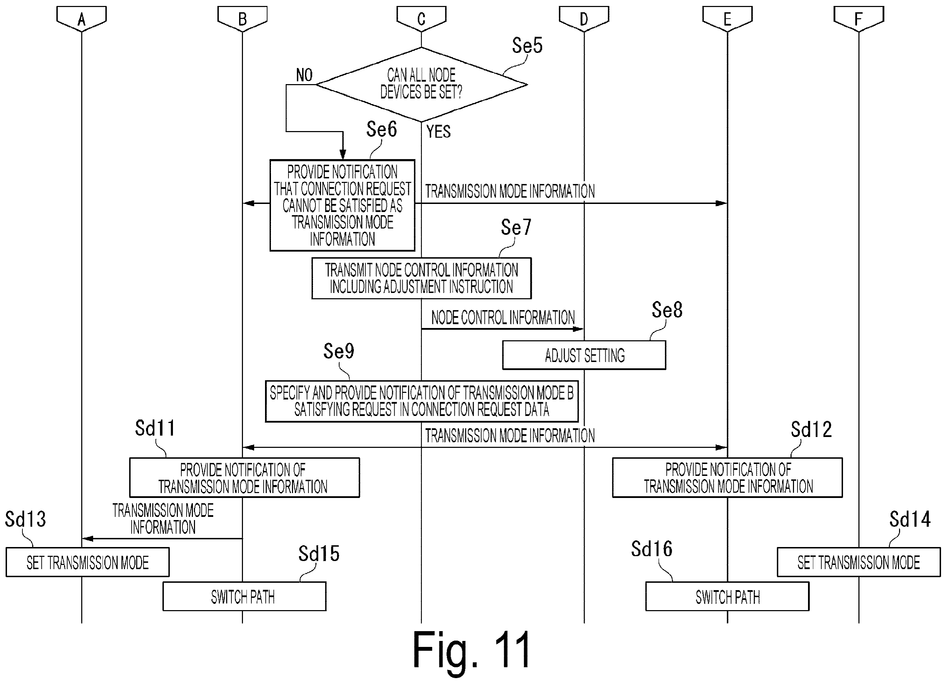

[Fig. 11] A sequence diagram illustrating a flow of processing performed by an optical transmission system (second one) according to the third embodiment.
[Fig. 12] A sequence diagram illustrating a flow of processing performed by an optical transmission system (first one) according to a fourth embodiment.
[Fig. 13] A sequence diagram illustrating a flow of processing performed by an optical transmission system (second one) according to the fourth embodiment.
[Fig. 14] A sequence diagram illustrating a flow of processing performed by an optical transmission system (second one) according to the fourth embodiment.

### Description of Embodiments

### (First embodiment)

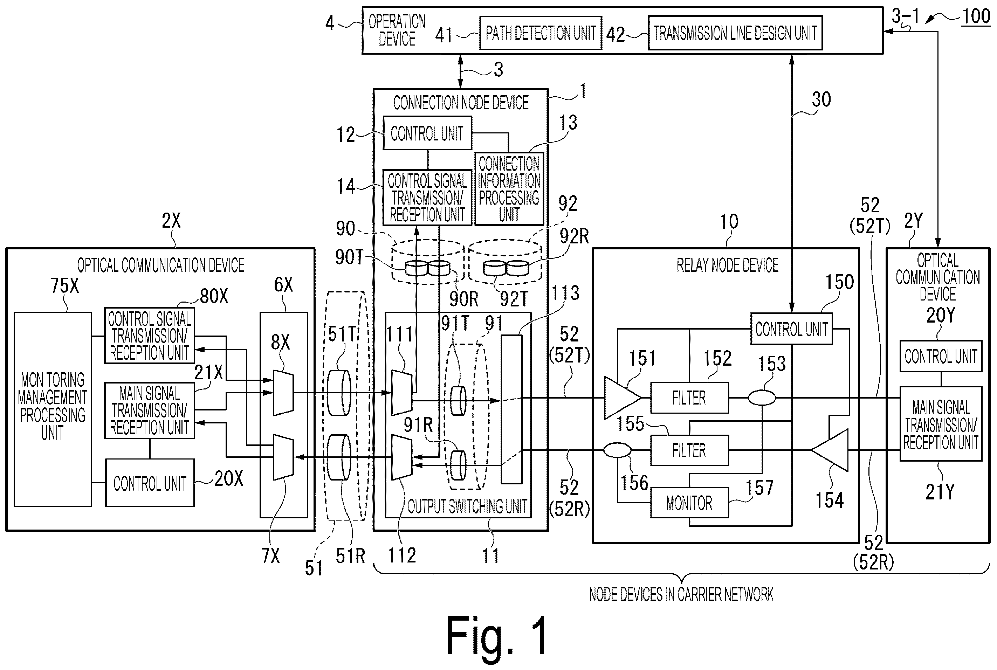

Hereinafter, embodiments of the present invention will be described with reference to the drawings. Fig. 1 is a block diagram illustrating a configuration of an optical transmission system 100 according to a first embodiment. The optical transmission system 100 includes a connection node device 1, an optical communication device 2X, an optical communication device 2Y, an operation device 4, and a relay node device 10. The numbers of connection node devices 1, optical communication devices 2X, optical communication devices 2Y, and relay node devices 10 are not particularly limited, but in Fig. 1, a case where the numbers of connection node devices 1, optical communication devices 2X, optical communication devices 2Y, and relay node devices 10 are respectively one will be described as an example.

The connection node device 1, the optical communication device 2Y, and the relay node device 10 illustrated in Fig. 1 are node devices provided in a carrier network. In the following description, the node device provided in the carrier network means a device that can be controlled by the operation device 4. For example, a device directly connected to the operation device 4 via a connection line may be a node device.

The connection node device 1 and the optical communication device 2X are connected via an optical transmission line 51, the connection node device 1 and the relay node device 10 are connected via an optical transmission line 52, and the relay node device 10 and the optical communication device 2Y are connected via the optical transmission line 52. The optical transmission line 51 connects a communication device provided outside the carrier network and a node device provided in the carrier network. For example, the optical transmission line 51 connects the optical communication device 2X and the connection node device 1. The optical transmission line 52 connects the node devices in the carrier network. For example, the optical transmission line 52 connects the connection node device 1 and the relay node device 10, and connects the optical communication device 2Y and the connection node device 1.

The operation device 4 is connected to the connection node device 1 via a connection line 3, connected to the optical communication device 2Y via a connection line 3-1, and connected to the relay node device 10 via a connection line 30. Note that in a case where a plurality of the optical communication devices 2Y are provided, the operation device 4 is connected to each of the optical communication devices 2Y via a plurality of the connection lines 3-1. The operation device 4 is an aspect of a control device.

The optical communication device 2X is, for example, a communication device used by a user. The optical communication device 2X is an aspect of a user-side optical communication device. The optical communication device 2Y is, for example, an optical transmission device owned by a communication company, that is, a node device in the carrier network, or a white box transponder owned by a communication company or a data center company. **In** the first embodiment, it is assumed that the optical communication device 2Y is a node device in the carrier network.

The connection node device 1 is provided between the optical communication device 2X and the optical communication device 2Y. The connection node device 1 forms an optical path so as to enable communication between the optical communication device 2X and the optical communication device 2Y.

The relay node device 10 is provided between the optical communication device 2X and the optical communication device 2Y. In response to an instruction from the operation device 4, the relay node device 10 optimizes the transmission line in order to satisfy a connection request (transmission distance or transmission capacity) from the user. Here, the optimization of the transmission line is to, for example, expand a pass wavelength band in a filter, increase output optical power in an optical amplifier, or the like so as to satisfy a wavelength band and a communication distance required for communication in a desired transmission mode.

The optical transmission line 51 includes, for example, optical fibers 51T and 51R such as dark fibers. Note that, here, in order to differentiate two optical fibers included in the optical transmission line 51, alphabetic characters of "T" and "R" are added to a reference numeral "51" for convenience of description. The symbol "T" means a transmission direction as viewed from the optical communication device 2X and a reception direction as viewed from the connection node device 1, the relay node device 10, and the optical communication device 2Y. The symbol "R" means a reception direction as viewed from the optical communication device 2X and a transmission direction as viewed from the connection node device 1, the relay node device 10, and the optical communication device 2Y.

The optical transmission line 52 includes, for example, optical fibers 52T and 52R constituting a carrier network of a communication company. The connection lines 3, 3-1, and 30 are communication lines. For example, the connection lines 3, 3-1, and 30 may be wired communication lines such as a dedicated line, wireless communication lines, communication networks such as a mobile communication network and the Internet network, or a data communication network (DCN). **In** the case of connection via an optical communication line, a part of an overhead area of a digital frame transferred by an optical signal may be allocated as the connection lines 3, 3-1, and 30.

The optical communication device 2X is, for example, a transponder that transmits data provided from an external device to the optical transmission line 51 and outputs the data received via the optical transmission line 51 to the external device. The optical communication device 2X includes a control signal multiplexer/demultiplexer unit 6X, a control unit 20X, a main signal transmission/reception unit 21X, a monitoring management processing unit 75X, and a control signal transmission/reception unit 80X.

The control signal multiplexer/demultiplexer unit 6X is connected to the control signal transmission/reception unit 80X, the main signal transmission/reception unit 21X, and the optical transmission line 51 via an optical fiber inside the optical communication device 2X. The control signal multiplexer/demultiplexer unit 6X includes a wavelength multiplexer unit 8X and a wavelength demultiplexer unit 7X. The wavelength multiplexer unit 8X performs wavelength-multiplexing on the optical signal of the control signal output from the control signal transmission/reception unit 80X and the optical signal of the main signal output from the main signal transmission/reception unit 21X. The wavelength multiplexer unit 8X transmits the wavelength-multiplexed optical signal to the optical fiber 51T of the optical transmission line 51.

The wavelength demultiplexer unit 7X performs wavelength-demultiplexing on the wavelength-multiplexed optical signal transmitted through the optical fiber 51R of the optical transmission line 51. Thus, the wavelength demultiplexer unit 7X demultiplexes, for example, the wavelength-multiplexed optical signal into the optical signal of the control signal and the optical signal of the main signal. The wavelength demultiplexer unit 7X outputs the demultiplexed optical signal of the control signal to the control signal transmission/reception unit 80X, and outputs the demultiplexed optical signal of the main signal to the main signal transmission/reception unit 21X.

The wavelength demultiplexer unit 7X and the wavelength multiplexer unit 8X are constituted by, for example, a 3dB coupler, a wavelength filter, an optical splitter, an arrayed-waveguide grating (AWG), C-band couplers, couplers for C-band and O-band, and the like.

The control unit 20X is connected to the main signal transmission/reception unit 21X, and controls the main signal transmission/reception unit 21X or inputs and outputs information to and from the main signal transmission/reception unit 21X. For example, when starting connection to a main signal transmission/reception unit 21Y included in the optical communication device 2Y, the control unit 20X generates a connection request instruction signal.

When receiving the connection request instruction signal from the control unit 20X, the main signal transmission/reception unit 21X generates data indicating a connection request (hereinafter referred to as "connection request data"). Here, the connection request data is data including a connection destination address, a connection source address, a desired bit rate, and specification information such as a specification of the main signal transmission/reception unit 21X. The specification information of the main signal transmission/reception unit 21X is, for example, information including a modulation scheme available in the main signal transmission/reception unit 21X, an available forward error correction (FEC) type, a baud rate, the type of light source, and the like.

Here, the information indicating the type of light source is, for example, information indicating whether the light source is of a type that outputs a single predetermined wavelength or the light source is of a type that outputs a wavelength after changing the wavelength, and information including, in addition to the information, information regarding a wavelength or a wavelength band that can be output by the light source. The information indicating the type of the light source varies depending on the light source included in the main signal transmission/reception unit 21X.

Address information for identifying each of the main signal transmission/reception unit 21X included in the optical communication device 2X and the main signal transmission/reception unit 21Y included in the optical communication device 2Y is assigned to each of the main signal transmission/reception unit 21X and the main signal transmission/reception unit 21Y in advance. The control unit 20X stores the desired bit rate and the address information of the connection destination in an internal storage area in advance. The main signal transmission/reception unit 21X stores the address information assigned to the main signal transmission/reception unit 21X in the internal storage area in advance.

Note that the control unit 20X does not store the address information of the connection destination in advance in the internal storage area, and for example, may receive and acquire the address information of the connection destination specified by the user of the optical communication device 2X or may acquire the address information of the connection destination from the connection node device 1. Instead of storing the desired bit rate in advance in the internal storage area, the control unit 20X may receive an input operation of the user, and receive and acquire data of a bit rate specified in advance by the user as the desired bit rate.

For example, when requesting the connection to the main signal transmission/reception unit 21Y included in the optical communication device 2Y, the control unit 20X generates a connection request instruction signal including the address information of the main signal transmission/reception unit 21Y and the desired bit rate and outputs the generated connection request instruction signal to the main signal transmission/reception unit 21X. The main signal transmission/reception unit 21X reads the address information of the main signal transmission/reception unit 21Y included in the connection request instruction signal received from the control unit 20X and determines the address information as the connection destination address information, and reads the address information of the main signal transmission/reception unit 21X stored in the internal storage area and determines the address information as the connection source address information. The main signal transmission/reception unit 21X generates connection request data including the connection destination address information and connection source address information determined as described above, the desired bit rate included in the connection request instruction signal, and the specification information of the main signal transmission/reception unit 21X stored in the internal storage area.

The main signal transmission/reception unit 21X transmits connection request data to the connection node device 1 in a basic mode. Here, the basic mode is a transmission mode determined in advance by a combination of predetermined basic output optical power, a basic modulation scheme, a basic wavelength, and the like. The main signal transmission/reception unit 21X stores information regarding the basic mode in the internal storage area in advance. Therefore, when receiving the connection request instruction signal from the control unit 20X, the main signal transmission/reception unit 21X transmits the connection request data to the connection node device 1 in the basic mode.

Furthermore, the main signal transmission/reception unit 21X receives transmission data provided from the external device connected to the optical communication device 2X. The transmission data is, for example, a client signal or the like. The main signal transmission/reception unit 21X generates a transmission data signal in a transmission frame format including the received transmission data in a payload. At this time, the main signal transmission/reception unit 21X generates the transmission data signal such that the connection request data is included in the free space of the overhead of the transmission frame. Note that the main signal transmission/reception unit 21X may generate the transmission data signal so as not to include the transmission data in the payload in order not to transmit the transmission data, at a timing before the transmission mode information is determined.

The main signal transmission/reception unit 21X receives a reception data signal of an electrical signal. The main signal transmission/reception unit 21X reads data included in the payload and overhead of the received reception data signal. The main signal transmission/reception unit 21X outputs the client signal in the read data to the external device.

The monitoring management processing unit 75X receives an electrical control signal output by the control signal transmission/reception unit 80X. The monitoring management processing unit 75X performs processing related to monitoring and management according to the type of the received control signal and data included in the control signal. In a case where the control signal is transmitted to the operation device 4 in the processing related to monitoring and management, the monitoring management processing unit 75X generates an electrical control signal and outputs the electrical control signal to the control signal transmission/reception unit 80X.

The control signal transmission/reception unit 80X converts the electrical control signal generated by the monitoring management processing unit 75X into an optical control signal and outputs the optical control signal to the control signal multiplexer/demultiplexer unit 6X. The control signal transmission/reception unit 80X converts the optical control signal output by the control signal multiplexer/demultiplexer unit 6X into an electrical control signal and outputs the electrical control signal to the monitoring management processing unit 75X.

The optical communication device 2Y includes a control unit 20Y and a main signal transmission/reception unit 21 Y. The control unit 20Y is connected to the main signal transmission/reception unit 21Y, and controls the main signal transmission/reception unit 21Y or inputs and outputs information to and from the main signal transmission/reception unit 21Y. The control unit 20Y performs setting corresponding to the transmission mode information transmitted from the operation device 4 on the main signal transmission/reception unit 21Y. For example, the control unit 20Y performs setting of the modulation scheme indicated in the transmission mode information, the baud rate, the bit rate, the FEC type, the signal band permitted to be used, and the like on the main signal transmission/reception unit 21Y according to the configuration parameters.

The main signal transmission/reception unit 21Y transmits and receives the main signal with the configuration parameters configured in the control unit 20Y. The main signal transmission/reception unit 21Y generates an optical signal of the main signal with the configuration parameters configured in the control unit 20Y, and transmits the generated optical signal to the optical transmission line 52. The main signal transmission/reception unit 21Y receives a reception data signal of an electrical signal. The main signal transmission/reception unit 21Y reads data included in the payload and overhead of the received reception data signal. The main signal transmission/reception unit 21Y outputs the client signal in the read data to the external device.

Note that the optical communication device 2Y may include the same functional units as the optical communication device 2X. That is, the optical communication device 2Y may further include a control signal multiplexer/demultiplexer unit 6Y, a monitoring management processing unit 75Y, and a control signal transmission/reception unit 80Y. The control signal multiplexer/demultiplexer unit 6Y, the monitoring management processing unit 75Y, and the control signal transmission/reception unit 80Y perform processing similar to the control signal multiplexer/demultiplexer unit 6X, the monitoring management processing unit 75X, and the control signal transmission/reception unit 80X included in the optical communication device 2X.

The connection node device 1 includes an output switching unit 11, a control unit 12, a connection information processing unit 13, a control signal transmission/reception unit 14, a control signal internal optical line 90, and a connection processing internal optical line 92. The control signal internal optical line 90 is an optical line including an optical fiber 90T and an optical fiber 90R. The connection processing internal optical line 92 is an optical line including an optical fiber 92T and an optical fiber 92R.

The output switching unit **11** includes a function of multiplexing or demultiplexing the input optical signal, a main signal internal optical line 91, and a function of switching an output path of the optical signal. As the function of multiplexing or demultiplexing the optical signal, the output switching unit **11** includes a wavelength demultiplexer unit **111** and a wavelength multiplexer unit 112. The wavelength demultiplexer unit **111** and the wavelength multiplexer unit 112 are constituted by, for example, a 3dB coupler, a wavelength filter, an optical splitter, an AWG, C-band couplers, couplers for C-band and O-band, and the like.

The main signal internal optical line 91 is an optical line including an optical fiber 91T and an optical fiber 91R. As the function of switching the output path of the optical signal, the output switching unit **11** includes an output port switching unit 113. The output port switching unit 113 is, for example, an optical cross-connect. Note that the output port switching unit 113 may have another configuration regardless of the optical cross-connect as long as the output port switching unit 113 can switch the output path of the optical signal.

The wavelength demultiplexer unit 111 performs wavelength-demultiplexing on the wavelength-multiplexed optical signal transmitted through the optical fiber 51T of the optical transmission line 51. Thus, the wavelength demultiplexer unit **111** demultiplexes, for example, the wavelength-multiplexed optical signal into the optical signal of the control signal and the optical signal of the main signal. The wavelength demultiplexer unit 111 outputs the demultiplexed optical signal of the control signal to the control signal transmission/reception unit 14 through the optical fiber 90T of the control signal internal optical line 90. Furthermore, the wavelength demultiplexer unit **111** outputs the demultiplexed optical signal of the main signal to the output port switching unit 113 through the optical fiber 91T of the main signal internal optical line 91.

The wavelength multiplexer unit 112 performs wavelength-multiplexing on the optical signal of the control signal output by the control signal transmission/reception unit 14 and the optical signal of the main signal input through the optical fiber 91R of the main signal internal optical line 91 or the optical signal input through the optical fiber 92R of the connection processing internal optical line 92. The wavelength multiplexer unit 112 transmits the wavelength-multiplexed optical signal to the optical fiber 51R of the optical transmission line 51.

The output port switching unit 113 switches the output port of the optical signal according to the control of the control unit 12. For example, the output port switching unit 113 performs switching processing of switching the connection destination of the optical fiber 51T to the optical fiber 92T or the optical fiber 52T. The output port switching unit 113 performs switching processing of switching the connection destination of the optical fiber 51R to the optical fiber 92R or the optical fiber 52R.

**In** a state before an optical path for performing communication between the optical communication device 2X and the optical communication device 2Y is formed (hereinafter, referred to as an "initial state"), the output port switching unit 113 switches the output port so as to connect the optical fiber 91T and the optical fiber 92T and connect the optical fiber 91R and the optical fiber 92R according to the control of the control unit 12. By performing this switching, the connection request data transmitted from the optical communication device 2X operating in the basic mode is transferred to the operation device 4.

On the other hand, in a state after an optical path for performing communication between the optical communication device 2X and the optical communication device 2Y is formed, the output port switching unit 113 switches the output port so as to connect the optical fiber 91T and the optical fiber 52T and connect the optical fiber 91R and the optical fiber 52R according to the control of the control unit 12. By performing this switching, the main signal transmitted from the optical communication device 2X is transferred to the optical communication device 2Y via the relay node device 10.

The control unit 12 stores the address-path mapping table in the internal storage area in advance. The address-path mapping table is a table in which pieces of identification information for specifying the optical transmission lines 51 and 52 connected to the main signal transmission/reception units 21X and 21Y respectively corresponding to pieces of address information are respectively associated with pieces of address information of the main signal transmission/reception units 21X and 21Y respectively included in the optical communication devices 2X and 2Y connected to the connection node device 1. Note that the control unit 12 may acquire the address-path mapping table from the external device on demand instead of storing the address-path mapping table in advance in the internal storage area.

The connection information processing unit 13 converts the optical signal output from the output port switching unit 113 into an electrical signal. In a case where the converted electrical signal includes the connection request data transmitted by the optical communication device 2X, the connection information processing unit 13 reads and acquires the connection request data from the electrical signal. Furthermore, the connection information processing unit 13 calculates and acquires the transmission line information of the optical fiber 51T of the optical transmission line 51 by, for example, predetermined calculation disclosed in Reference Literature 1 below, on the basis of the converted electrical signal.

[Reference Literature 1: Takeo Sasai, et al, "Simultaneous Detection of Anomaly Points and Fiber Types in Multi-Span Transmission Links Only by Receiver-Side Digital Signal Processing", OFC 2020: 1-3]

Here, the transmission line information of the optical fiber 51T is information including a loss of the optical fiber 51T included in the optical transmission line 51, a gain of an amplifier inserted in the optical transmission line 51, a noise figure (NF) of the amplifier, and a fiber type of optical fiber 51T. Furthermore, the connection information processing unit 13 acquires a bit error rate (BER) of the optical transmission line 51 on the basis of the converted electrical signal, and generates connection information including the acquired BER of the optical transmission line 51 and the calculated transmission line information of the optical fiber 51T.

Note that the connection information processing unit 13 may acquire a quality factor (Q factor), polarization mode dispersion (PMD), chromatic dispersion (CD), or an optical signal-to-noise ratio (OSNR) in addition to the BER, and include any one of these pieces of information in the connection information. The connection information processing unit 13 outputs the connection request data and the connection information to the control unit 12.

The control unit 12 transmits the connection information output by the connection information processing unit 13 and the connection request data to the operation device 4 through the connection line 3. The control unit 12 outputs the transmission mode information received from the operation device 4 to the connection information processing unit 13. The control unit 12 outputs, to the output port switching unit 113, a control signal (hereinafter, referred to as a "switching instruction signal") for instructing switching processing of switching the connection destination.

The operation device 4 includes a path detection unit 41 and a transmission line design unit 42. The path detection unit 41 stores, in advance, a path information table in which pieces of address information of the main signal transmission/reception units 21X and 21Y of the optical communication devices 2X and 2Y are associated with pieces of identification information for specifying optical transmission lines corresponding to pieces of the address information in the internal storage area. The path detection unit 41 may acquire the path information table from the external device on demand instead of storing the path information table in advance in the internal storage area.

For example, in a case of the optical transmission system 100, in the path information table, pieces of identification information for specifying the optical transmission lines 51 and 52 connected to the main signal transmission/reception units 21X and 21Y respectively corresponding to pieces of address information are respectively associated with pieces of address information of the main signal transmission/reception units 21X and 21Y respectively included in the optical communication devices 2X and 2Y. The path detection unit 41 refers to the path information table and detects identification information for specifying the optical transmission line 52 corresponding to the connection destination address information included in the connection request data transmitted by the control unit 12 of the connection node device 1.

The transmission line design unit 42 stores the transmission line information of the optical transmission line 52 in association with the identification information for specifying the optical transmission line 52 in the internal storage area. Note that the transmission line design unit 42 may calculate the transmission line information of the optical transmission line 52 in advance by predetermined calculation on the basis of the optical signal transmitted through the optical transmission line 52 constituting the carrier network and store the calculated transmission line information in the internal storage area, or may acquire the transmission line information from the external device on demand at a specific timing when a network is installed. The transmission line information of the optical transmission line 52 may be obtained in advance by a method other than the predetermined calculation. Note that the transmission line information of the optical transmission line 52 calculated by the transmission line design unit 42 is information regarding the optical transmission line between the connection node device 1 and the optical communication device 2Y.

The transmission line design unit 42 stores information indicating a free resource of the optical transmission line 52 in the internal storage area. Here, the information indicating a free resource is, for example, information indicating a wavelength, a wavelength band, or an optical transmission path that is not used for communication when the free state of the resource is determined. Note that the information indicating a free resource is updated by the transmission line design unit 42 every time a communication path is established.

On the basis of the connection information (for example, including BER of the optical transmission line 51 and the calculated transmission line information of the optical fiber 51T) transmitted by the control unit 12 of the connection node device 1 and the transmission line information of the optical transmission line 52 corresponding to the identification information for specifying the optical transmission line 52 detected by the path detection unit 41, the transmission line design unit 42 calculates a transmission line characteristics (Quality of Transmission (QoT)) by using, for example, a transmission design tool provided inside. Here, as the transmission design tool, for example, a Gaussian Noise model in Python (GNPy) or the like described in Reference Literature 2 below is applied.

[Reference Literature 2: Alessio Ferrari, et al, "The GNPy Open Source Library of Applications for Software Abstraction of WDM Data Transport in Open Optical Networks", 2020 6th IEEE International Conference on Network Softwarization (NetSoft), DOI:10.1109/NetSoft48620.2020.9165313, June 2020]

Here, the transmission line characteristics are values calculated by a transmission design tool, such as an OSNR, a Generalized Signal-to-Noise Ratio (GSNR), a Q-value, and a BER. Here, the information such as an OSNR, a GSNR, a Q-value, or a BER calculated by the transmission design tool is information such as an OSNR, a GSNR, a Q-value, or a BER of the entire optical transmission line including the optical transmission line 51 and the optical transmission line 52.

The transmission line design unit 42 selects configuration information by predetermined selection processing on the basis of the calculated transmission line characteristics and connection request data. Here, the predetermined selection processing is performed as follows. For example, the transmission line design unit 42 first selects a transmission mode specified by configuration information that satisfies the transmission capacity requested in the connection request data in terms of the transmission capacity. Here, the configuration information for specifying the transmission mode is, for example, information including a modulation scheme, a baud rate, a bit rate, a forward error correction (FEC) type, output optical power, and a signal band permitted to be used. Note that the FEC type information available in the main signal transmission/reception unit 21Y is acquired in advance by the transmission line design unit 42 and stored in the internal storage area, or acquired on demand from the main signal transmission/reception unit 21Y or the external device.

Next, the transmission line design unit 42 determines whether or not the transmission mode specified by the configuration information satisfying the transmission capacity satisfies a request in the connection request data (for example, the transmission distance) on the basis of the calculated values of the transmission line characteristics. The transmission distance is a distance from the position of the optical communication device 2X to the destination ground (for example, the optical communication device 2Y). In a case where it is determined that the transmission mode specified by the configuration information satisfying the transmission capacity satisfies the request in the connection request data (transmission distance), the transmission line design unit 42 determines the transmission mode to be used for communication of the optical communication devices 2X and 2Y to be the transmission mode specified by the configuration information satisfying the transmission capacity.

On the other hand, in a case where it is determined that the transmission mode specified by the configuration information satisfying the transmission capacity does not satisfy the request in the connection request data (transmission distance), the transmission line design unit 42 operates to change the setting of the filter or the optical amplifier included in the node device provided in the carrier network. Here, in the first embodiment, the node devices provided in the carrier network are, for example, the connection node device 1, the relay node device 10, and the optical communication device 2Y as described above. Hereinafter, the setting of the filter or the optical amplifier included in the node device provided in the carrier network may be simply referred to as the setting of the node device.

**In** the following description, as an example, a case where the transmission line design unit 42 changes the setting of the filter or the optical amplifier included in the relay node device 10 will be described. Note that the transmission mode specified by the configuration information satisfying the transmission capacity may be multi-carrier transmission using a plurality of wavelengths for one optical communication, and in this case, the transmission line design unit 42 may set a filter bandwidth without an inter-channel card band in the setting of each node device.

Note that, in the above description, the transmission line design unit 42 determines whether or not the transmission mode specified by the configuration information satisfying the transmission capacity satisfies the request in the connection request data (for example, the transmission distance). However, the transmission line design unit 42 may determine whether or not the transmission mode specified by the configuration information satisfying the transmission capacity has a sufficient transmission margin, or may determine both whether or not the transmission mode specified by the configuration information satisfying the transmission capacity satisfies the request in the connection request data (for example, the transmission distance) and whether or not the transmission mode has a sufficient transmission margin. The sufficient transmission margin means a setting having a margin capable of satisfying a higher request condition than the request in the connection request data. The reference of the sufficient transmission margin is set in advance.

The setting of the node device includes, for example, a bandwidth of the filter, a parameter indicating a shape of the filter, a gain of the optical amplifier, and output power of the optical amplifier. The transmission line design unit 42 calculates the setting of the filter or the optical amplifier included in the relay node device 10 that can satisfy the request in the connection request data (transmission distance). For example, the transmission line design unit 42 may calculate the bandwidth of the filter so as to increase the transmission distance by increasing the pass bandwidth of the filter, or may calculate the output power of the optical amplifier so as to increase the transmission distance by increasing the output power of the optical amplifier. The transmission line design unit 42 transmits setting information including the calculated setting contents to the relay node device 10 through the connection line 30. Furthermore, the transmission line design unit 42 selects the transmission mode specified by the configuration information that satisfies the request in the connection request data.

For example, the transmission line design unit 42 selects the FEC type available in the main signal transmission/reception unit 21X and the main signal transmission/reception unit 21Y on the basis of the FEC type included in the specification information of the main signal transmission/reception unit 21X. After selecting the FEC type, the transmission line design unit 42 compares an OSNR threshold determined for each modulation scheme included in the specification information of the main signal transmission/reception unit 21X with the OSNR of the calculated transmission line characteristics, and selects a modulation scheme in which the OSNR threshold is equal to or greater than the OSNR of the calculated transmission line characteristics. The transmission line design unit 42 selects the configuration information by processing of selecting a combination of a modulation scheme that enables transmission at a bit rate equal to or higher than the bit rate indicated by the desired bit rate information from among a plurality of bit rate candidates in each of the selected several modulation schemes and a baud rate. As described above, the transmission mode is specified by the configuration information selected by the transmission line design unit 42.

In the above-described predetermined selection processing, a combination of a modulation scheme that enables transmission at a bit rate equal to or higher than the bit rate indicated by the desired bit rate information and closest to the bit rate indicated by the desired bit rate information from among a plurality of bit rate candidates in each of the selected several modulation schemes and a baud rate may be selected.

The transmission line design unit 42 receives a response to the setting information from each node device. In a case where the response transmitted from the relay node device 10 indicates that the setting contents included in the setting information can be set, the transmission line design unit 42 instructs the relay node device 10 to change to the calculated setting contents of the filter and the optical amplifier. In a case where the response transmitted from the relay node device 10 indicates that the setting contents included in the setting information cannot be set, the transmission line design unit 42 notifies the optical communication device 2X via the connection node device 1 of information indicating that there is no transmission mode that satisfies the connection request as the transmission mode information, and notifies the optical communication device 2Y via the connection line 3-1 of the information.

The transmission mode is specified by the configuration information selected by the transmission line design unit 42. The transmission line design unit 42 generates transmission mode information including the selected configuration information and the connection source address information included in the connection request data. The transmission line design unit 42 transmits the generated transmission mode information and the identification information for specifying the optical transmission line 52 detected by the path detection unit 41 to the control unit 12 of the connection node device 1 via the connection line 3.

The transmission line design unit 42 stores, in advance, a connection line table in which the address information of the main signal transmission/reception unit 21Y included in the optical communication device 2Y is associated with the connection line 3-1 corresponding to the optical communication device 2Y corresponding to the address information in the internal storage area. The transmission line design unit 42 refers to the connection line table stored in the internal storage area, and transmits the generated transmission mode information to the optical communication device 2Y through the connection line 3-1 connected to the optical communication device 2Y including the main signal transmission/reception unit 21Y corresponding to the connection destination address information included in the connection request data.

The relay node device 10 includes a control unit 150, an optical amplifier 151, a filter 152, a branch unit 153, an optical amplifier 154, a filter 155, a branch unit 156, and a monitor 157.

The control unit 150 holds specification information such as specifications of the filters 152 and 155 and the optical amplifiers 151 and 154 included in the relay node device 10. For example, the specification information of the filters 152 and 155 and the optical amplifier 151 and 154 is information including the signal gains of the optical amplifiers 151 and 154, the output power of the optical amplifiers 151 and 154, the operation wavelength ranges of the optical amplifiers 151 and 154, the signal bandwidths of the filters 152 and 155, and parameters indicating the shapes of the filters 152 and 155. The control unit 150 transmits the specification information of the filters 152 and 155 and the optical amplifiers 151 and 154 to the operation device 4 as node setting information in response to the request from the operation device 4 or at a predetermined timing. The predetermined timing may be a predetermined time or may be a timing when the relay node device 10 is activated.

The control unit 150 receives an instruction transmitted from the operation device 4. The instruction transmitted from the operation device 4 includes setting information or node control information. When the setting information is received, the control unit 150 determines whether or not the setting contents included in the setting information can be set. Specifically, the control unit 150 determines whether or not the settings indicated by the setting contents can be set for each of the filters 152 and 155 and the optical amplifiers 151 and 154.

In a case where the settings indicated by the setting contents can be set in all of the filters 152 and 155 and the optical amplifiers 151 and 154, the control unit 150 transmits, to the operation device 4, a response indicating that the setting is possible. In a case where the settings indicated by the setting contents cannot be set in part or all of the filters 152 and 155 and the optical amplifiers 151 and 154, the control unit 150 transmits, to the operation device 4, a response indicating that the setting is not possible. When the node control information is received, the control unit 150 adjusts the settings of the filters 152 and 155 and the optical amplifiers 151 and 154 such that the setting contents are included in the setting information.

The optical amplifier 151 amplifies the optical signal transmitted through the optical fiber 52T and outputs the amplified optical signal to the filter 152. The setting of the optical amplifier 151 is adjusted by the control unit 150. The filter 152 has a function of transmitting a specific frequency band. The filter 152 transmits the optical signal of a set specific frequency band with respect to the optical signal amplified by the optical amplifier 151, and attenuates an optical signal of a frequency band other than the specific frequency band. The branch unit 153 branches the optical signal transmitted through the filter 152. The optical signal branched by the branch unit 153 is output to the optical fiber 52T and the monitor 157.

The optical amplifier 154 amplifies the optical signal transmitted through the optical fiber 52R and outputs the amplified optical signal to the filter 155. The setting of the optical amplifier 154 is adjusted by the control unit 150. The filter 155 has a function of transmitting a specific frequency band. The filter 155 transmits the optical signal of a set specific frequency band with respect to the optical signal amplified by the optical amplifier 154, and attenuates an optical signal of a frequency band other than the specific frequency band. The branch unit 156 branches the optical signal transmitted through the filter 155. The optical signal branched by the branch unit 156 is output to the optical fiber 52R and the monitor 157.

The monitor 157 monitors the input optical signal. The monitor 157 is, for example, a spectrum monitor or a power monitor. In a case where the monitor 157 is the spectrum monitor, the monitor 157 measures a power spectrum of the input optical signal. In a case where the monitor 157 is the power monitor, the monitor 157 measures the intensity of the input optical signal. The monitor 157 outputs a measurement result to the control unit 150.

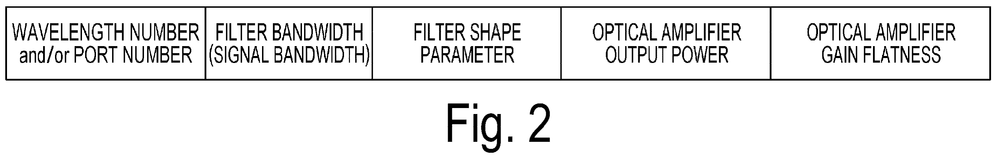

Fig. 2 is a diagram illustrating an example of the format of the setting information transmitted by the operation device 4 according to the first embodiment. As illustrated in Fig. 2, the setting information includes information such as a wavelength number and/or a port number, a filter bandwidth, a filter shape parameter, optical amplifier output power, and optical amplifier gain flatness. The wavelength number and/or the port number indicates at least one of a wavelength number or a port number to be controlled by the filter. As the wavelength number and/or the port number, a wavelength number or a port number that has not been used for communication in the information indicating the free resource is selected. The filter bandwidth indicates a bandwidth of the filter after adjustment. The filter shape parameter indicates a parameter representing the shape of the filter after adjustment. The optical amplifier output power indicates the output power of the optical amplifier after adjustment. The optical amplifier gain flatness indicates the maximum change amount of the gain in a use frequency range after adjustment. Note that the setting information may include information regarding a power level of each channel.

### (Processing by optical transmission system of first embodiment)

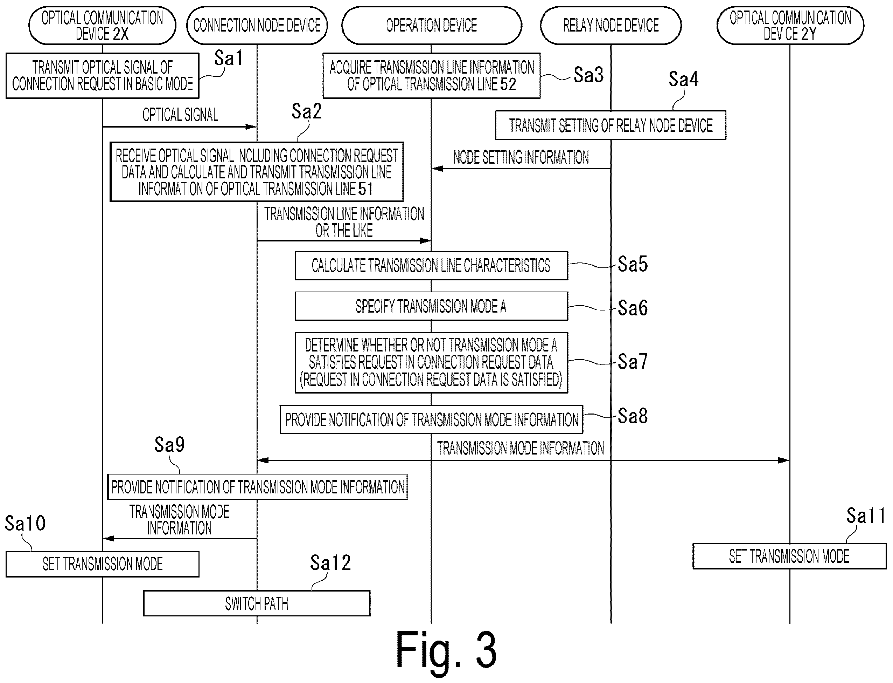

Fig. 3 is a sequence diagram illustrating a flow of processing performed by the optical transmission system 100 (first one) according to the first embodiment. Note that, in Fig. 3, processing in a case where the specified transmission mode satisfies the request will be described. Note that at the start of the processing in Fig. 3, the output port switching unit 113 of the connection node device 1 sets the connection destination of the optical transmission line 51 to the connection information processing unit 13 included in the connection node device 1 in the initial state.

The control unit 20X of the optical communication device 2X generates a connection request instruction signal including the address information of the main signal transmission/reception unit 21Y and the desired bit rate in order to establish connection to the main signal transmission/reception unit 21Y included in the optical communication device 2Y. The control unit 20X outputs the generated connection request instruction signal to the main signal transmission/reception unit 21X. The main signal transmission/reception unit 21X receives the connection request instruction signal output by the control unit 20X. The main signal transmission/reception unit 21X sets the address information of the main signal transmission/reception unit 21Y included in the received connection request instruction signal as the connection destination address information.

The main signal transmission/reception unit 21X sets the address information of the main signal transmission/reception unit 21X stored in the internal storage area as the connection source address information. The main signal transmission/reception unit 21X generates connection request data including the connection destination address information and connection source address information, the desired bit rate included in the connection request instruction signal, and the specification information of the main signal transmission/reception unit 21X stored in the internal storage area.

The main signal transmission/reception unit 21X generates an optical signal of the connection request in the basic mode using the generated connection request data. Specifically, the main signal transmission/reception unit 21X generates a transmission data signal such that the connection request data is included in the free space of the overhead of the transmission frame, and generates an optical signal by optically modulating the continuous wave light on the basis of the generated transmission data signal. The main signal transmission/reception unit 21X transmits the generated optical signal to the optical fiber 51T (step Sa1). The optical signal transmitted from the main signal transmission/reception unit 21X propagates through the optical fiber 51T and is input to the wavelength demultiplexer unit 111 of the connection node device 1.

The wavelength demultiplexer unit 111 wavelength-demultiplexes the input optical signal. Here, it is assumed that the wavelength of the optical signal of the connection request is a wavelength output to the optical fiber 91T from the wavelength demultiplexer unit 111. In this case, the optical signal demultiplexed by the wavelength demultiplexer unit 111 is input to the output port switching unit 113 through the optical fiber 91T. In the output port switching unit 113, a path is set so as to connect the optical fiber 91T and the optical fiber 92T in the initial state. Therefore, the optical signal input to the output port switching unit 113 is input to the connection information processing unit 13 through the optical fiber 92T.

The connection information processing unit 13 calculates the transmission line information of the optical transmission line 51 on the basis of the input optical signal (step Sa2). Specifically, the connection information processing unit 13 converts the received optical signal into an electrical signal to obtain a reception data signal. Next, the connection information processing unit 13 reads the connection request data included in an overhead area of the reception data signal. Furthermore, the connection information processing unit 13 acquires the BER of the optical transmission line 51 from the reception data signal. The connection information processing unit 13 calculates the transmission line information of the optical transmission line 51 on the basis of the reception data signal.

The connection information processing unit 13 generates connection information including the calculated transmission line information of the optical transmission line 51 and the BER of the optical transmission line 51. The connection information processing unit 13 outputs the connection request data and the generated connection information to the control unit 12. The control unit 12 receives the connection request data output by the connection information processing unit 13 and the connection information. The control unit 12 transmits the received connection request data and the connection information to the operation device 4 through the connection line 3.

The operation device 4 receives the connection request data and connection information transmitted from the control unit 12 of the connection node device 1. The path detection unit 41 refers to the path information table stored in the internal storage area or the path information table acquired on demand, and detects the identification information for specifying the optical transmission line 52 corresponding to the connection destination address information included in the received connection request data. Here, the path detection unit 41 detects the identification information for specifying the optical transmission line 52 corresponding to the address information of the main signal transmission/reception unit 21Y. The path detection unit 41 outputs the identification information for specifying the detected optical transmission line 52 to the transmission line design unit 42.

The transmission line design unit 42 receives the identification information for specifying the optical transmission line 52 output from the path detection unit 41. The transmission line design unit 42 reads and acquires the transmission line information of the optical transmission line 52 corresponding to the received identification information for specifying the optical transmission line 52 from the internal storage area, or acquires the transmission line information of the optical transmission line 52 on demand (Step Sa3). The control unit 150 of the relay node device 10 transmits the node setting information to the operation device 4 through the connection line 30 in response to the request from the operation device 4 or at a predetermined timing (step Sa4).

The operation device 4 receives the node setting information transmitted from the control unit 150. The transmission line design unit 42 calculates the transmission line characteristics on the basis of the acquired transmission line information of the optical transmission line 52 and the received connection information (step Sa5). The transmission line design unit 42 selects configuration information that satisfies a condition in terms of the transmission capacity for the received connection request data. The transmission mode is specified by the configuration information selected by the transmission line design unit 42. Here, the transmission line design unit 42 specifies a transmission mode A on the basis of the selected configuration information (step Sa6).

The transmission line design unit 42 determines whether or not the specified transmission mode A satisfies the request in the connection request data (transmission distance) (step Sa7). Here, it is assumed that the transmission line design unit 42 determines that the specified transmission mode A satisfies the request in the connection request data. In this case, the transmission line design unit 42 generates transmission mode information including the selected configuration information and the connection source address information included in the connection request data. Thereafter, the transmission line design unit 42 notifies the connection node device 1 and the optical communication device 2Y of the generated transmission mode information (step Sa8). For example, the transmission line design unit 42 notifies the connection node device 1 of the generated transmission mode information through the connection line 3, and notifies the optical communication device 2Y of the generated transmission mode information through the connection line 3-1. Note that the transmission line design unit 42 includes the address information of the main signal transmission/reception unit 21Y included in the optical communication device 2Y as the connection source address information in the transmission mode information addressed to the optical communication device 2Y.

The control unit 12 of the connection node device 1 receives the transmission mode information transmitted by the transmission line design unit 42 of the operation device 4. The control unit 12 outputs the received transmission mode information to the connection information processing unit 13. The connection information processing unit 13 generates an optical signal including the transmission mode information output from the control unit 12. Specifically, first, the connection information processing unit 13 generates a transmission data signal such that the transmission mode information is included in the free space of the overhead of the transmission frame. Next, on the basis of the generated transmission data signal, the connection information processing unit 13 optically modulates the continuous wave light output by the light source included in the connection information processing unit 13 with the basic output optical power according to the basic modulation scheme of the basic mode. Thus, the connection information processing unit 13 generates an optical signal including the transmission mode information. At this time, the connection information processing unit 13 generates an optical signal including the transmission mode information in the basic mode.

The connection information processing unit 13 outputs the generated optical signal to the output switching unit **11** through the optical fiber 92R. The output switching unit **11** transmits the optical signal output from the connection information processing unit 13 to the optical fiber 51R via the optical fiber 91R and the wavelength multiplexer unit 112. In this manner, the connection node device 1 notifies the optical communication device 2X of the transmission mode information (step Sa9). The optical signal transmitted from the output switching unit **11** propagates through the optical fiber 51R and is input to the optical communication device 2X.

The optical communication device 2X receives the optical signal propagated through the optical fiber 51R. The main signal transmission/reception unit 21X of the optical communication device 2X converts the received optical signal into an electrical signal to obtain a reception data signal. The main signal transmission/reception unit 21X reads the transmission mode information from the overhead area of the reception data signal. In a case where the connection source address information included in the read transmission mode information is not the address information assigned to the main signal transmission/reception unit 21X stored in the internal storage area, the main signal transmission/reception unit 21X discards the received transmission mode information. On the other hand, in a case where the address information included in the received transmission mode information matches the address information assigned to the main signal transmission/reception unit 21X, the main signal transmission/reception unit 21X sets the transmission mode indicated by the read transmission mode information.

The control unit 20Y of the optical communication device 2Y receives the transmission mode information transmitted through the connection line 3-1. In a case where the connection source address information included in the received transmission mode information is not the address information assigned to the main signal transmission/reception unit 21Y stored in the internal storage area, the control unit 20Y discards the transmission mode information. On the other hand, in a case where the address information included in the received transmission mode information matches the address information assigned to the main signal transmission/reception unit 21Y, the control unit 20Y outputs the transmission mode information to the main signal transmission/reception unit 21Y. The main signal transmission/reception unit 21Y sets the transmission mode indicated by the transmission mode information (step Sa11).

After the notification of the transmission mode information, the control unit 12 of the connection node device 1 refers to the path information table and detects the identification information for specifying the optical transmission line 51 corresponding to the connection source address information included in the transmission mode information. Here, the control unit 12 detects the identification information for specifying the optical transmission line 51 corresponding to the address information of the main signal transmission/reception unit 21X. The control unit 12 performs switching processing of connecting the optical transmission line 51 and the optical transmission line 52 on the basis of the detected identification information for specifying the optical transmission line 51 and the identification information for specifying the optical transmission line 52. The control unit 12 outputs a switching instruction signal in which the connection destination of the optical fiber 51T is set to the optical fiber 52T and a switching instruction signal in which the connection destination of the optical fiber 51R is set to the optical fiber 52R to the output port switching unit 113 of the output switching unit 11.

When the switching instruction signal is received from the control unit 12, the output port switching unit 113 connects the optical fiber 51T and the optical fiber 52T and connects the optical fiber 51R and the optical fiber 52R (step Sa12). Thus, as illustrated in Fig. 1, the optical fiber 51T and the optical fiber 52T are connected via the output switching unit 11, and the optical fiber 51R and the optical fiber 52R are connected via the output switching unit 11. Therefore, the main signal transmission/reception unit 21X of the optical communication device 2X and the main signal transmission/reception unit 21Y of the optical communication device 2Y are connected via the optical transmission line 51 and the optical transmission line 52.

### (Processing by optical transmission system of first embodiment)

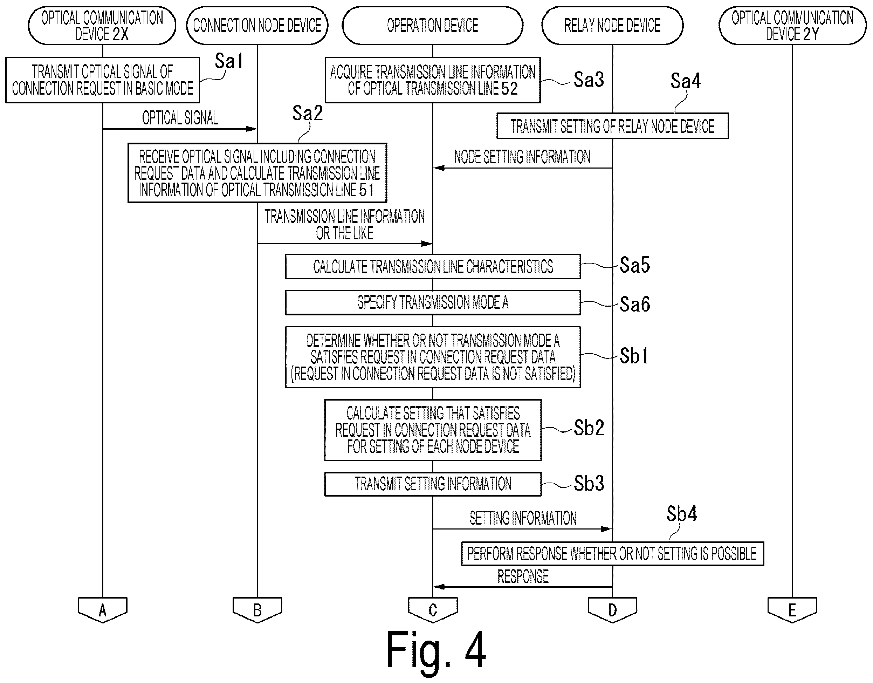

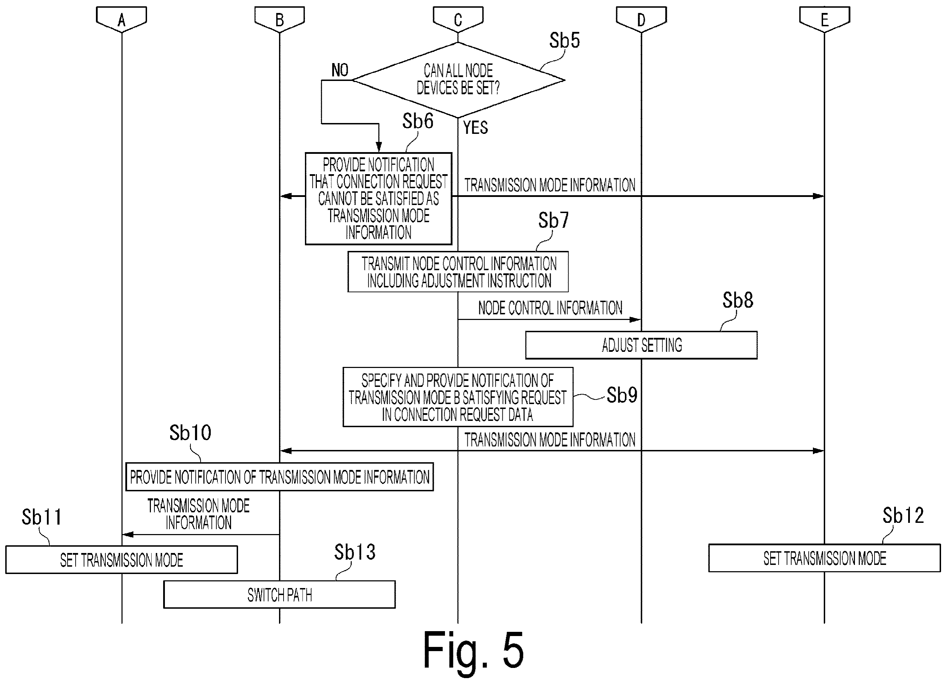

Figs. 4 and 5 are sequence diagrams illustrating a flow of processing performed by the optical transmission system 100 (second one) according to the first embodiment. Note that, in Figs. 4 and 5, processing in a case where the specified transmission mode does not satisfy the request will be described. In Figs. 4 and 5, the same processing steps as those in Fig. 3 are denoted by the same reference numerals as those used in Fig. 3, and the description thereof will be omitted.

After the processing in step Sa6, the transmission line design unit 42 determines whether or not the specified transmission mode A satisfies the request in the connection request data (transmission distance) (step Sb1). Here, it is assumed that the transmission line design unit 42 determines that the specified transmission mode A does not satisfy the request in the connection request data. In this case, the transmission line design unit 42 calculates the setting that satisfies the request in the connection request data for each node device of the optical transmission line 52 (step Sb2).

Note that the setting that satisfies the request in the connection request data calculated by the transmission line design unit 42 is the setting of the filter or the optical amplifier as described above. Then, a node device that does not include at least one of the optical amplifier or the filter is excluded from the target of the calculation of the setting that satisfies the request in the connection request data. In the example illustrated in Fig. 1, the node device including at least one of the optical amplifier or the filter is only the relay node device 10. Then, the transmission line design unit 42 calculates the setting that satisfies the request in the connection request data for the filters 152 and 155 and optical amplifiers 151 and 154 included in the relay node device 10. The transmission line design unit 42 generates setting information including the calculated setting contents of the node device, and transmits the generated setting information to the target node device (step Sb3). For example, the transmission line design unit 42 generates setting information including the calculated setting contents of the filters 152 and 155 and optical amplifiers 151 and 154 included in the relay node device 10, and transmits the generated setting information to the relay node device 10 through the connection line 30.

The control unit 150 of the relay node device 10 receives the setting information transmitted from the operation device 4. The control unit 150 determines whether or not the setting contents indicated by the received setting information can be set. The control unit 150 transmits a response indicating whether or not the setting contents can be set to the operation device 4 through the connection line 30 (step Sb4).

The transmission line design unit 42 of the operation device 4 receives the response transmitted from the relay node device 10. The transmission line design unit 42 determines whether or not all the node devices can be set on the basis of the received response (step Sb5). The fact that all the node devices can be set means that a response indicating that the setting is possible is received from all the node devices. That is, in all the node devices, the setting contents indicated by the setting information transmitted by the operation device 4 can be set.

In a case where it is determined that not all the node devices can be set (step Sb5-NO), the transmission line design unit 42 generates transmission mode information including information indicating that the connection request cannot be satisfied and connection source address information included in the connection request data. Thereafter, the transmission line design unit 42 notifies the connection node device 1 and the optical communication device 2Y of the generated transmission mode information (step Sb6).

On the other hand, in a case where it is determined that all the node devices can be set (step Sb5-YES), the transmission line design unit 42 transmits node control information including an adjustment instruction to each of the node devices located on the optical transmission line 52 (step Sb7). At this time, the transmission line design unit 42 is only required to transmit the node control information to the node device that requires the adjustment of the setting of at least one of the optical amplifier or the filter among the node devices located on the optical transmission line 52. In the example described here, the transmission line design unit 42 transmits the node control information to the relay node device 10. The adjustment instruction is an instruction to change the current setting in the optical amplifier or the filter of the node device to the setting indicated by the setting information.

The control unit 150 of the relay node device 10 receives the node setting information transmitted from the transmission line design unit 42. The control unit 150 adjusts the setting of the relay node device 10 according to the received node setting information (step Sb8). Specifically, the control unit 150 adjusts the settings of the optical amplifiers 151 and 154 and the filters 152 and 155 included in the relay node device 10 to the settings indicated by the setting contents transmitted from the operation device 4. Thus, the optical amplifiers 151 and 154 and the filters 152 and 155 included in the relay node device 10 are set to satisfy the request in the connection request data.

After the processing of step Sb7, the transmission line design unit 42 specifies a new transmission mode that satisfies the request in the connection request data. Here, it is assumed that the transmission line design unit 42 specifies a transmission mode B as the new transmission mode that satisfies the request in the connection request data. Transmission mode B is a transmission mode different from transmission mode A. The transmission line design unit 42 generates transmission mode information including configuration information in the specified transmission mode B and connection source address information included in the connection request data. Thereafter, the transmission line design unit 42 notifies the connection node device 1 and the optical communication device 2Y of the generated transmission mode information (step Sb9). For example, the transmission line design unit 42 notifies the connection node device 1 of the generated transmission mode information through the connection line 3, and notifies the optical communication device 2Y of the generated transmission mode information through the connection line 3-1.

The control unit 12 of the connection node device 1 receives the transmission mode information transmitted by the transmission line design unit 42 of the operation device 4. The control unit 12 outputs the received transmission mode information to the connection information processing unit 13. The connection information processing unit 13 generates an optical signal including the transmission mode information output from the control unit 12. Specifically, first, the connection information processing unit 13 generates a transmission data signal such that the transmission mode information is included in the free space of the overhead of the transmission frame. Next, on the basis of the generated transmission data signal, the connection information processing unit 13 optically modulates the continuous wave light output by the light source included in the connection information processing unit 13 with the basic output optical power according to the basic modulation scheme of the basic mode. Thus, the connection information processing unit 13 generates an optical signal including the transmission mode information. At this time, the connection information processing unit 13 generates an optical signal including the transmission mode information in the basic mode.

The connection information processing unit 13 outputs the generated optical signal to the output switching unit 11 through the optical fiber 92R. The output switching unit 11 transmits the optical signal output from the connection information processing unit 13 to the optical fiber 51R via the optical fiber 91R and the wavelength multiplexer unit 112 (step Sb10). In this manner, the connection node device 1 notifies the optical communication device 2X of the transmission mode information. The optical signal transmitted from the output switching unit 11 propagates through the optical fiber 51R and is input to the optical communication device 2X.

The optical communication device 2X receives the optical signal propagated through the optical fiber 51R. The main signal transmission/reception unit 21X of the optical communication device 2X converts the received optical signal into an electrical signal to obtain a reception data signal. The main signal transmission/reception unit 21X reads the transmission mode information from the overhead area of the reception data signal. In a case where the connection source address information included in the read transmission mode information is not the address information assigned to the main signal transmission/reception unit 21X stored in the internal storage area, the main signal transmission/reception unit 21X discards the received transmission mode information. On the other hand, in a case where the address information included in the received transmission mode information matches the address information assigned to the main signal transmission/reception unit 21X, the main signal transmission/reception unit 21X sets the transmission mode (for example, the transmission mode B) indicated by the read transmission mode information (step Sb11).

The control unit 20Y of the optical communication device 2Y receives the transmission mode information transmitted through the connection line 3-1. In a case where the connection source address information included in the received transmission mode information is not the address information assigned to the main signal transmission/reception unit 21Y stored in the internal storage area, the control unit 20Y discards the transmission mode information. On the other hand, in a case where the address information included in the received transmission mode information matches the address information assigned to the main signal transmission/reception unit 21Y, the control unit 20Y outputs the transmission mode information to the main signal transmission/reception unit 21Y. The main signal transmission/reception unit 21Y sets the transmission mode (for example, the transmission mode B) indicated by the transmission mode information (step Sb12).

After the notification of the transmission mode information, the control unit 12 of the connection node device 1 refers to the path information table and detects the identification information for specifying the optical transmission line 51 corresponding to the connection source address information included in the transmission mode information. Here, the control unit 12 detects the identification information for specifying the optical transmission line 51 corresponding to the address information of the main signal transmission/reception unit 21X. The control unit 12 performs switching processing of connecting the optical transmission line 51 and the optical transmission line 52 on the basis of the detected identification information for specifying the optical transmission line 51 and the identification information for specifying the optical transmission line 52. The control unit 12 outputs a switching instruction signal in which the connection destination of the optical fiber 51T is set to the optical fiber 52T and a switching instruction signal in which the connection destination of the optical fiber 51R is set to the optical fiber 52R to the output port switching unit 113 of the output switching unit 11.

When the switching instruction signal is received from the control unit 12, the output port switching unit 113 connects the optical fiber 51T and the optical fiber 52T and connects the optical fiber 51R and the optical fiber 52R (step Sb13). Thus, as illustrated in Fig. 1, the optical fiber 51T and the optical fiber 52T are connected via the output switching unit 11, and the optical fiber 51R and the optical fiber 52R are connected via the output switching unit 11. Therefore, the main signal transmission/reception unit 21X of the optical communication device 2X and the main signal transmission/reception unit 21Y of the optical communication device 2Y are connected via the optical transmission line 51 and the optical transmission line 52.

In the optical transmission system 100 configured as described above, the relay node device 10, which is at least one node device of the plurality of node devices, includes the filters 152 and 155 that perform filter processing on the optical signal and the control unit 150 that adjusts the settings of the filters 152 and 155 according to the instruction transmitted from the operation device 4. The operation device 4 includes the transmission line design unit 42 that specifies the transmission mode (for example, the transmission mode A) used for communication of the optical communication device 2X in response to the request in connection request data transmitted from the optical communication device 2X, calculates the settings of at least the filters 152 and 155 included in the relay node device 10 in a case where the specified transmission mode does not satisfy the request in the connection request data, and notifies the relay node device 10 of the node control information including the calculated settings of the filters 152 and 155. As described above, the operation device 4 can optimize the transmission mode of the optical communication device 2X in terms of the transmission capacity at the time of setting the optical path, and further optimizes the transmission line. Therefore, at the time of setting an end-to-end optical path including the optical communication device 2X located outside the carrier network, it is possible to optimize the setting of the relay node device 10 which is a node device through which the optical path passes.

Furthermore, in the optical transmission system 100, in a case where the specified transmission mode does not satisfy the request in the connection request data in terms of the transmission capacity, the transmission line design unit 42 of the operation device 4 further determines the transmission mode that satisfies the request in the connection request data (request other than the transmission capacity). Therefore, even when the transmission mode of the optical communication device 2X cannot be optimized in terms of the transmission capacity, the transmission mode of the optical communication device 2X can be optimized in terms other than the transmission capacity.

### (Second embodiment)

**In** a second embodiment, a configuration will be described in which, in a case where the setting contents calculated by the operation device cannot be set, the node device notifies the operation device of specification information that can be set in the optical amplifier or the filter included in the node device, and calculates the settings again on the basis of the specification information.

A system configuration in the second embodiment is similar to that in the first embodiment. Since the processing of the operation device 4 and the processing of the relay node device 10 are different from those of the first embodiment, the following difference will be mainly described. Note that, also in the second embodiment, a configuration in which the operation device 4 adjusts the setting of the relay node device 10 which is the node device will be described.

In a case where it is determined that the setting of the setting contents indicated by the setting information transmitted from the operation device 4 is impossible, the control unit 150 of the relay node device 10 according to the second embodiment transmits the specification information that can be set in the filters 152 and 155 and the optical amplifiers 151 and 154 to the operation device 4 as a response.

The transmission line design unit 42 of the operation device 4 according to the second embodiment calculates the setting that makes a transmission mode close to the request in the connection request data available in a range that satisfies the specifications on the basis of the specification information included in the response transmitted from the relay node device 10. As described above, in the second embodiment, the transmission line design unit 42 determines the transmission mode such that the optical communication device 2X and the optical communication device 2Y can communicate using the transmission mode as close as possible to the request in the connection request data even in a case where the request in the connection request data cannot be satisfied.

### (Processing by optical transmission system of second embodiment)

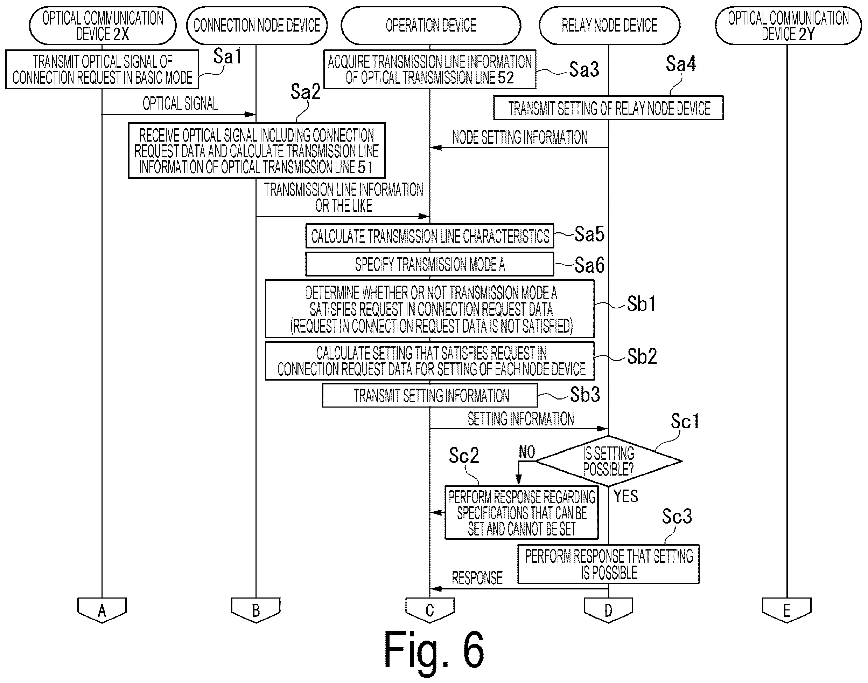

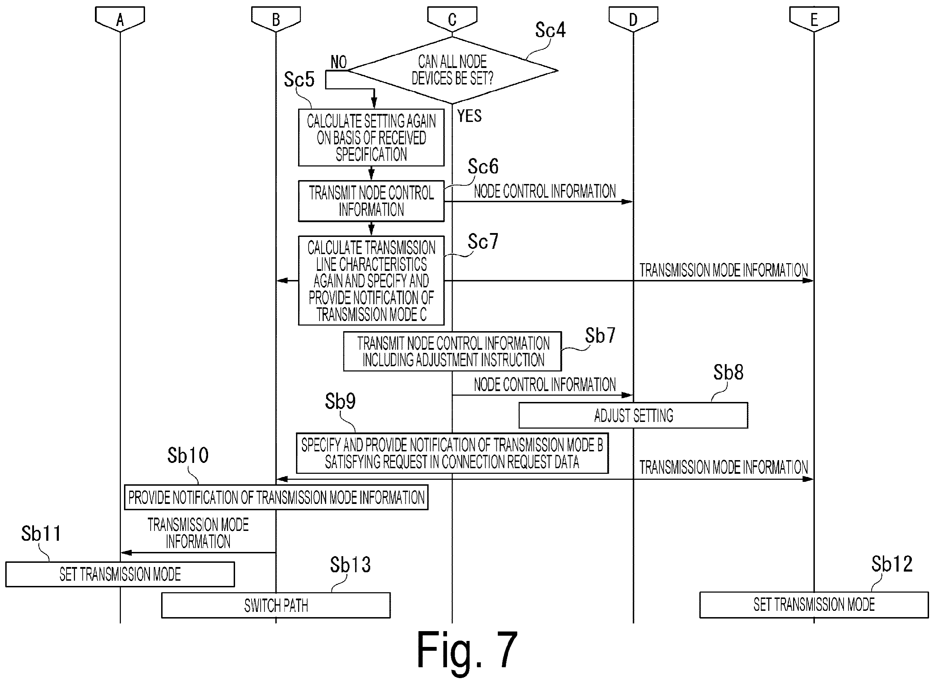

Figs. 6 and 7 are sequence diagrams illustrating a flow of processing of the optical transmission system 100 in the second embodiment. Note that, in Figs. 6 and 7, processing in a case where the specified transmission mode does not satisfy the request will be described. In Figs. 6 and 7, the same processing steps as those in Fig. 3 are denoted by the same reference numerals as those used in Fig. 3, and the description thereof will be omitted.

After the transmission line design unit 42 transmits the setting information indicating the calculated setting for each node to each relay node device 10 in the processing of step Sb3, the control unit 150 of the relay node device 10 receives the setting information transmitted from the operation device 4. The control unit 150 determines whether or not the setting contents indicated by the received setting information can be set (step Sc1). The setting information includes setting contents indicating settings of the filter and the optical amplifier included in the node device. The relay node device 10 includes the filters 152 and 155, and the optical amplifiers 151 and 154. Thus, the control unit 150 determines whether or not the setting contents indicated by the received setting information can be set in the filters 152 and 155, and the optical amplifiers 151 and 154.

In a case where the setting of the setting contents indicated by the setting information is impossible (step Sc1-NO), the control unit 150 transmits a response including the content indicating that the setting is impossible and the specification information that can be set by the relay node device 10 to the operation device 4 through the connection line 30 (step Sc2). Here, the specifications that can be set by the relay node device 10 are information such as bandwidths that can be set in the filters 152 and 155 included in the relay node device 10 and gains that can be set in the optical amplifiers 151 and 154.

On the other hand, in a case where the setting of the setting contents indicated by the setting information is possible (step Sc1-YES), the control unit 150 transmits the response including the content indicating that the setting is possible to the operation device 4 through the connection line 30 (step Sc3).

The transmission line design unit 42 of the operation device 4 receives the response transmitted from the relay node device 10. The transmission line design unit 42 determines whether or not all the node devices can be set on the basis of the received response (step Sc4). In a case where it is determined that not all the node devices can be set (step Sc4-NO), the transmission line design unit 42 calculates the setting of the relay node device 10 again on the basis of the specification information included in the received response (step Sc5). Specifically, the transmission line design unit 42 calculates the setting that enables the transmission mode close to the request in the connection request data on the basis of the specifications indicated by the specification information included in the received response. For example, the transmission line design unit 42 compares each of the desired bit rate information in the request in the connection request data, the specification information of the main signal transmission/reception unit 21X, and the transmission distance with the information regarding each transmission mode, and calculates the setting that enables use of the closest transmission mode.

Here, as an example, in a case where the transmission mode close to the request in the connection request data is a transmission mode C, the transmission line design unit 42 calculates the settings of the optical amplifiers 151 and 154 and the filters 152 and 155 included in the relay node device 10 such that the transmission mode C can be used. Transmission mode C is a transmission mode different from the transmission modes A and B. The transmission line design unit 42 transmits the node control information including an adjustment instruction indicating information of the calculated setting to the relay node device 10 (step Sc6).

The transmission line design unit 42 measures the transmission line information of the optical transmission line 52 after updating the setting. The transmission line design unit 42 calculates the transmission line characteristics on the basis of the measured transmission line information of the optical transmission line 52 and the received connection information. The transmission line design unit 42 specifies the transmission mode C on the basis of the calculated transmission line characteristics (step Sc7). Thereafter, the transmission line design unit 42 generates transmission mode information including configuration information in the specified transmission mode C and connection source address information included in the connection request data. Thereafter, the transmission line design unit 42 notifies the connection node device 1 and the optical communication device 2Y of the generated transmission mode information (step Sc7). For example, the transmission line design unit 42 notifies the connection node device 1 of the generated transmission mode information through the connection line 3, and notifies the optical communication device 2Y of the generated transmission mode information through the connection line 3-1.

In the processing of step Sc4, in a case where the transmission line design unit 42 determines that all the node devices can be set (step Sc4-YES), the processing in step Sb7 and subsequent steps is executed.

In the optical transmission system 100 according to the second embodiment configured as described above, effects similar to those of the first embodiment can be obtained.

Furthermore, in the optical transmission system 100 according to the second embodiment, in a case where the setting contents included in the node control information transmitted from the operation device 4 cannot be set, the relay node device 10 transmits specification information that can be set in each of the filters 152 and 155 to the operation device 4. The transmission line design unit 42 of the operation device 4 calculates the settings of the filters 152 and 155 again on the basis of the specification information transmitted from the relay node device 10. Thus, optimization can be performed in a range in which the specifications of the filters 152 and 155 included in the relay node device 10 can satisfy the request.

Furthermore, in the optical transmission system 100 according to the second embodiment, after adjusting the settings of the filters 152 and 155 included in the relay node device 10, the operation device 4 calculates the transmission line characteristics again, and newly determines the transmission mode close to the request in the connection request data according to the calculated transmission line characteristics. As described above, the operation device 4 calculates the transmission line characteristics again on the basis of the fact that the transmission line information of the optical transmission line 52 changes in response to the change of the settings of the filters 152 and 155 included in the relay node device 10. The operation device 4 determines the transmission mode such that the optical communication device 2X and the optical communication device 2Y can communicate using the transmission mode as close as possible to the request in the connection request data even in a case where the request in the connection request data from the optical communication device 2X cannot be satisfied. Therefore, the optical transmission line and the transmission mode can be optimized in a range that satisfies at least the specifications of the filter included in the node device.

### (Third embodiment)

In a third embodiment, in a mode in which the optical communication devices located outside the carrier network are connected by an optical path, a configuration in which a setting of the node device is adjusted in a case where the request in the connection request data cannot be satisfied will be described.

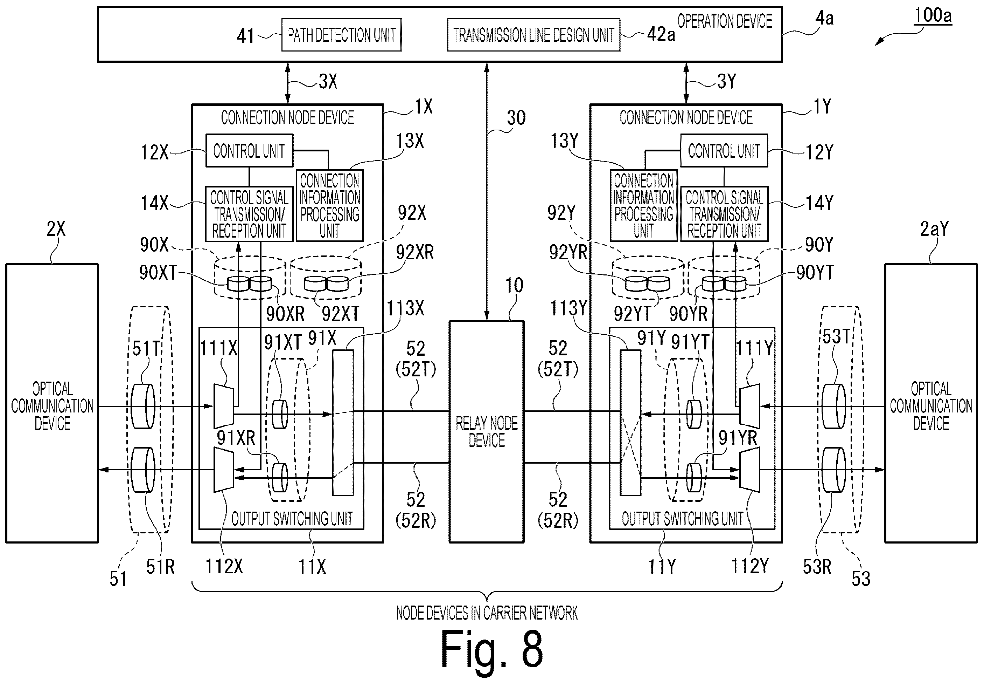

Fig. 8 is a block diagram illustrating a configuration of an optical transmission system 100a according to the third embodiment. The optical transmission system 100a includes a connection node device 1X, a connection node device 1Y, an optical communication device 2X, an optical communication device 2aY, an operation device 4a, and a relay node device 10. The numbers of connection node devices 1X, connection node device 1Y, optical communication devices 2X, optical communication devices 2aY, and relay node devices 10 are not particularly limited, but in Fig. 8, a case where the numbers of connection node devices 1X, connection node device 1Y, optical communication devices 2X, optical communication devices 2aY, and relay node devices 10 are respectively one will be described as an example.

The relay node device 10, the connection node device 1X, and the connection node device 1Y, which are illustrated in Fig. 8, are node devices provided in the carrier network. The optical communication devices 2X and 2aY are, for example, communication devices used by users.

The connection node device 1X and the optical communication device 2X are connected via an optical transmission line 51, the connection node device 1X and the relay node device 10 are connected via an optical transmission line 52, the relay node device 10 and the connection node device 1Y are connected via the optical transmission line 52, and the connection node device 1Y and the optical communication device 2aY are connected via an optical transmission line 53. The optical transmission line 53 connects the optical communication device 2aY and the connection node device 1Y. In the third embodiment, the optical transmission line 52 connects the connection node device 1X and the relay node device 10, and connects the relay node device 10 and the connection node device 1Y. The optical transmission line 53 includes, for example, optical fibers 53T and 53R such as dark fibers.

The operation device 4a is connected to the connection node device 1X via a connection line 3X, connected to the connection node device 1Y via a connection line 3Y, and connected to the relay node device 10 via a connection line 30.

The connection node devices 1X and 1Y include functional units similar to those of the connection node device 1 illustrated in Fig. 1. Hereinafter, in a case where the functional units respectively included in the connection node devices 1X and 1Y are indicated, the symbols of the functional units of the connection node device 1 illustrated in Fig. 1 are denoted by "X" and "Y", respectively, and the functional units will be described for distinction. Note that in the third embodiment, the symbol "T" in the connection node device 1X, the optical transmission line 51, and the optical transmission line 52 means a transmission direction as viewed from the optical communication device 2X and a reception direction as viewed from the connection node device 1Y, the relay node device 10, and the optical communication device 2aY. Furthermore, a symbol "R" in the connection node device 1X, the optical transmission line 51, and the optical transmission line 52 means a reception direction as viewed from the optical communication device 2X and a transmission direction as viewed from the connection node device 1Y, the relay node device 10, and the optical communication device 2aY. In the third embodiment, the symbol "T" in the connection node device 1Y and the optical transmission line 53 means a transmission direction as viewed from the optical communication device 2aY and a reception direction as viewed from the connection node device 1X, the relay node device 10, and the optical communication device 2X. Furthermore, the symbol "R" in the connection node device 1Y and the optical transmission line 53 means a reception direction as viewed from the optical communication device 2aY and a transmission direction as viewed from the connection node device 1X, the relay node device 10, and the optical communication device 2X.

The optical communication device 2aY includes the same functional units as the optical communication device 2X. Hereinafter, in the case of indicating the functional units included in the optical communication device 2aY, the symbol "X" of each functional unit included in the optical communication device 2X is replaced with "Y".

The operation device 4a includes a path detection unit 41 and a transmission line design unit 42a. The transmission line design unit 42a stores the transmission line information of the optical transmission line 52 in association with the identification information for specifying the optical transmission line 52 in the internal storage area. Note that the transmission line information of the optical transmission line 52 calculated by the transmission line design unit 42a is information regarding the optical transmission line between the connection node device 1X and the connection node device 1Y.

The transmission line design unit 42a stores information indicating a free resource of the optical transmission line 52 in the internal storage area. Note that the information indicating a free resource is updated by the transmission line design unit 42a every time a communication path is established. The transmission line design unit 42a stores, in advance, in an internal storage area, a connection line table in which the identification information for specifying the connection node device 1X is associated with the connection line 3X, and information for specifying the connection node device 1Y is associated with the connection line 3Y.

The transmission line design unit 42a calculates the transmission line characteristics of the optical transmission line from the optical transmission line 51 to the optical transmission line 53 via the optical transmission line 52 in order to connect a main signal transmission/reception unit 21X and a main signal transmission/reception unit 21Y. The transmission line design unit 42a specifies the transmission mode used for communication of the optical communication devices 2X and 2aY on the basis of the calculated transmission line characteristics.

On the basis of the connection information (for example, including BER of the optical transmission line 51 and the calculated transmission line information of the optical fiber 51T) transmitted by a control unit 12X of the connection node device 1X, the connection information (for example, including BER of the optical transmission line 53 and the calculated transmission line information of the optical fiber 53T) transmitted by a control unit 12Y of the connection node device 1Y, and the transmission line information of the optical transmission line 52 corresponding to the identification information for specifying the optical transmission line 52 detected by the path detection unit 41, the transmission line design unit 42a calculates the transmission line characteristics by using, for example, the transmission design tool provided inside.

The transmission line design unit 42a selects configuration information by predetermined selection processing on the basis of the calculated transmission line characteristics and the connection request data. Here, the predetermined selection processing in the third embodiment is performed as follows. For example, the transmission line design unit 42a first selects a transmission mode specified by the configuration information that satisfies the transmission capacity requested in each pieces of the connection request data in terms of the transmission capacity. In this manner, the transmission line design unit 42a selects the transmission mode specified by the configuration information that satisfies the transmission capacity requested in the connection request data transmitted from the optical communication device 2X and the transmission capacity requested in the connection request data transmitted from the optical communication device 2aY.

Next, the transmission line design unit 42a determines whether or not the transmission mode specified by the configuration information satisfying the transmission capacity satisfies a request in the connection request data (for example, the transmission distance) on the basis of the calculated values of the transmission line characteristics. In a case where it is determined that the transmission mode specified by the configuration information satisfying the transmission capacity satisfies the request in the connection request data (transmission distance), the transmission line design unit 42a determines the transmission mode to be used for communication of the optical communication devices 2X and 2aY to be the transmission mode specified by the configuration information satisfying the transmission capacity.

On the other hand, in a case where it is determined that the transmission mode specified by the configuration information satisfying the transmission capacity does not satisfy the request in the connection request data (transmission distance), the transmission line design unit 42a operates to change the setting of the filter or the optical amplifier included in the node device provided in the carrier network.

Note that, in the above description, the transmission line design unit 42a determines whether or not the transmission mode specified by the configuration information satisfying the transmission capacity satisfies the request in the connection request data (for example, the transmission distance). However, the transmission line design unit 42a may determine whether or not the transmission mode specified by the configuration information satisfying the transmission capacity has a sufficient transmission margin, or may determine both whether or not the transmission mode specified by the configuration information satisfying the transmission capacity satisfies the request in the connection request data (for example, the transmission distance) and whether or not the transmission mode has a sufficient transmission margin.

The transmission line design unit 42a calculates the setting of the filter or the optical amplifier included in the relay node device 10 that can satisfy the request in the connection request data (transmission distance). The transmission line design unit 42a transmits setting information including the calculated setting contents to the relay node device 10 through the connection line 30. Furthermore, the transmission line design unit 42a selects the transmission mode specified by the configuration information that satisfies the request in the connection request data.

The transmission line design unit 42a receives a response to the setting information from each node device. In a case where the response transmitted from the relay node device 10 indicates that the setting contents included in the setting information can be set, the transmission line design unit 42a instructs the relay node device 10 to change to the calculated setting contents of the filter and the optical amplifier. In a case where the response transmitted from the relay node device 10 indicates that the setting contents included in the setting information cannot be set, the transmission line design unit 42a notifies the optical communication device 2X via the connection node device 1X of information indicating that there is no transmission mode that satisfies the connection request as the transmission mode information, and notifies the optical communication device 2aY via the connection node device 1Y of the information.

The transmission mode is specified by the configuration information selected by the transmission line design unit 42a. The transmission line design unit 42a generates transmission mode information addressed to the optical communication device 2X including the selected configuration information and the connection source address information (for example, the address information of the optical communication device 2X) included in the connection request data transmitted from the optical communication device 2X. The transmission line design unit 42a transmits the generated transmission mode information addressed to the optical communication device 2X and the identification information for specifying the optical transmission line 52 detected by the path detection unit 41 to the control unit 12X of the connection node device 1X via the connection line 3X.

Furthermore, the transmission line design unit 42a generates transmission mode information addressed to the optical communication device 2aY including the selected configuration information and the connection source address information (for example, the address information of the optical communication device 2aY) included in the connection request data transmitted from the optical communication device 2aY. The transmission line design unit 42a transmits the generated transmission mode information addressed to the optical communication device 2aY and the identification information for specifying the optical transmission line 53 detected by the path detection unit 41 to the control unit 12Y of the connection node device 1Y via the connection line 3Y.

### (Processing by optical transmission system of third embodiment)

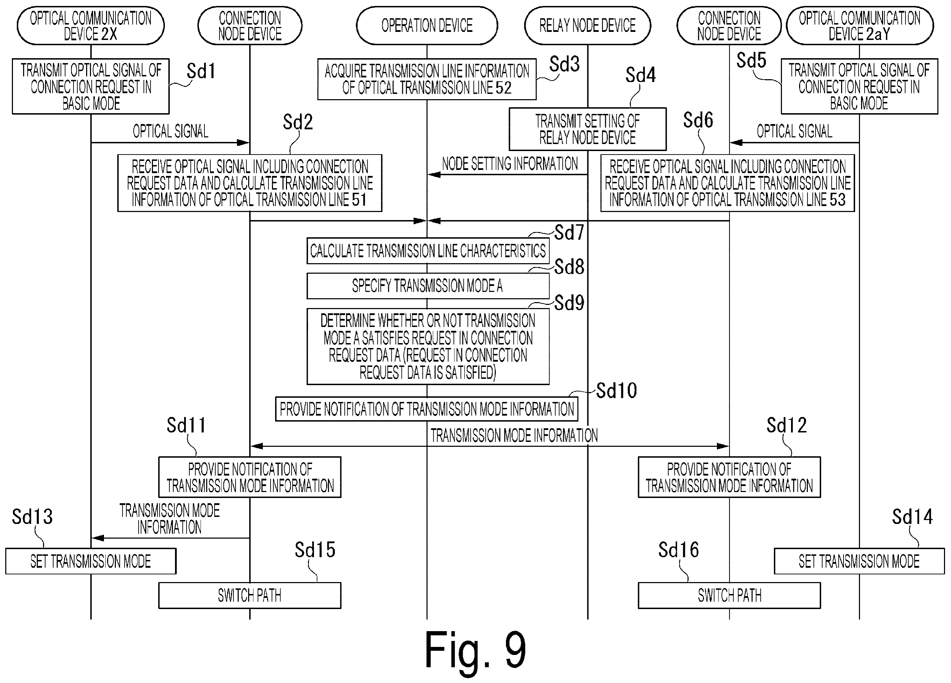

Fig. 9 is a sequence diagram illustrating a flow of processing performed by the optical transmission system 100a (first one) according to the third embodiment. Note that, in Fig. 9, processing in a case where the specified transmission mode satisfies the request will be described. Note that, at the start of the processing of Fig. 9, an output port switching unit 113X of the connection node device 1X sets the connection destination of the optical transmission line 51 to a connection information processing unit 13X included in the connection node device 1X in an initial state, and an output port switching unit 113Y of the connection node device 1Y sets the connection destination of the optical transmission line 53 to a connection information processing unit 13Y included in the connection node device 1Y in the initial state.

The control unit 20X of the optical communication device 2X generates a connection request instruction signal including the address information of the main signal transmission/reception unit 21Y and the desired bit rate in order to establish connection to the main signal transmission/reception unit 21Y included in the optical communication device 2aY. The control unit 20X outputs the generated connection request instruction signal to the main signal transmission/reception unit 21X. The main signal transmission/reception unit 21X receives the connection request instruction signal output by the control unit 20X. The main signal transmission/reception unit 21X sets the address information of the main signal transmission/reception unit 21Y included in the received connection request instruction signal as the connection destination address information.

The main signal transmission/reception unit 21X sets the address information of the main signal transmission/reception unit 21X stored in the internal storage area as the connection source address information. The main signal transmission/reception unit 21X generates connection request data including the connection destination address information and connection source address information, the desired bit rate included in the connection request instruction signal, and the specification information of the main signal transmission/reception unit 21X stored in the internal storage area.

The main signal transmission/reception unit 21X generates an optical signal of the connection request in the basic mode using the generated connection request data. The main signal transmission/reception unit 21X transmits the generated optical signal to the optical fiber 51T (step Sd1). The optical signal transmitted from the main signal transmission/reception unit 21X propagates through the optical fiber 51T and is input to a wavelength demultiplexer unit 111X of the connection node device 1X.

The wavelength demultiplexer unit 111X wavelength-demultiplexes the input optical signal. Here, it is assumed that the wavelength of the optical signal of the connection request transmitted by the optical communication device 2X is a wavelength output to an optical fiber 91XT from the wavelength demultiplexer unit 111X. In this case, the optical signal demultiplexed by the wavelength demultiplexer unit 111X is input to the output port switching unit 113X through the optical fiber 91XT. In the output port switching unit 113X, a path is set so as to connect the optical fiber 91XT and an optical fiber 92XT in the initial state. Therefore, the optical signal input to the output port switching unit 113X is input to the connection information processing unit 13X through the optical fiber 92XT.

The connection information processing unit 13X calculates the transmission line information of the optical transmission line 51 on the basis of the input optical signal (step Sd2). The connection information processing unit 13X generates connection information including the calculated transmission line information of the optical transmission line 51 and the BER of the optical transmission line 51. The connection information processing unit 13X outputs the connection request data and the generated connection information to the control unit 12X. The control unit 12X receives the connection request data output by the connection information processing unit 13X and the connection information. The control unit 12X transmits the received connection request data and the connection information to the operation device 4a through the connection line 3X.

The operation device 4a receives the connection request data and connection information transmitted from the control unit 12X of the connection node device 1X. The path detection unit 41 refers to the path information table stored in the internal storage area or the path information table acquired on demand, and detects the identification information for specifying the optical transmission line 52 corresponding to the connection destination address information included in the received connection request data. Here, the path detection unit 41 detects the identification information for specifying the optical transmission line 52 corresponding to the address information of the main signal transmission/reception unit 21Y. The path detection unit 41 outputs the identification information for specifying the detected optical transmission line 52 to the transmission line design unit 42a.

The transmission line design unit 42a receives the identification information for specifying the optical transmission line 52 output from the path detection unit 41. The transmission line design unit 42a reads and acquires the transmission line information of the optical transmission line 52 corresponding to the received identification information for specifying the optical transmission line 52 from the internal storage area, or acquires the transmission line information of the optical transmission line 52 on demand (step Sd3). The control unit 150 of the relay node device 10 transmits the node setting information to the operation device 4a through the connection line 30 in response to the request from the operation device 4a or at a predetermined timing (step Sd4).

The control unit 20Y of the optical communication device 2aY generates a connection request instruction signal including the address information of the main signal transmission/reception unit 21X and the desired bit rate in order to establish connection to the main signal transmission/reception unit 21X included in the optical communication device 2X. The control unit 20Y outputs the generated connection request instruction signal to the main signal transmission/reception unit 21Y. The main signal transmission/reception unit 21Y receives the connection request instruction signal output by the control unit 20Y. The main signal transmission/reception unit 21Y sets the address information of the main signal transmission/reception unit 21X included in the received connection request instruction signal as the connection destination address information.

The main signal transmission/reception unit 21Y sets the address information of the main signal transmission/reception unit 21Y stored in the internal storage area as the connection source address information. The main signal transmission/reception unit 21Y generates connection request data including the connection destination address information and connection source address information, the desired bit rate included in the connection request instruction signal, and the specification information of the main signal transmission/reception unit 21Y stored in the internal storage area.

The main signal transmission/reception unit 21Y generates an optical signal of the connection request in the basic mode using the generated connection request data. The main signal transmission/reception unit 21Y transmits the generated optical signal to the optical fiber 53T (step Sd5). The optical signal transmitted from the main signal transmission/reception unit 21Y propagates through the optical fiber 53T and is input to a wavelength demultiplexer unit 111Y of the connection node device 1Y.

The wavelength demultiplexer unit 111Y wavelength-demultiplexes the input optical signal. Here, it is assumed that the wavelength of the optical signal of the connection request transmitted by the optical communication device 2aY is a wavelength output to an optical fiber 91YT from the wavelength demultiplexer unit 111Y. In this case, the optical signal demultiplexed by the wavelength demultiplexer unit 111Y is input to the output port switching unit 113Y through the optical fiber 91YT. In the output port switching unit 113Y, a path is set so as to connect the optical fiber 91YT and an optical fiber 92YT in the initial state. Therefore, the optical signal input to the output port switching unit 113Y is input to the connection information processing unit 13Y through the optical fiber 92YT.

The connection information processing unit 13Y calculates the transmission line information of the optical transmission line 53 on the basis of the input optical signal (step Sd6). The connection information processing unit 13Y generates connection information including the calculated transmission line information of the optical transmission line 53 and the BER of the optical transmission line 53. The connection information processing unit 13Y outputs the connection request data and the generated connection information to the control unit 12Y. The control unit 12Y receives the connection request data output by the connection information processing unit 13Y and the connection information. The control unit 12Y transmits the received connection request data and the connection information to the operation device 4a through the connection line 3Y.

The operation device 4a receives the node setting information transmitted from the control unit 150. The transmission line design unit 42a calculates the transmission line characteristics on the basis of the acquired transmission line information of the optical transmission line 52, the connection information transmitted from the connection node device 1X, and the connection information transmitted from the connection node device 1Y (step Sd7). The transmission line design unit 42a selects configuration information that satisfies a condition in terms of the transmission capacity for the received connection request data. The transmission mode is specified by the configuration information selected by the transmission line design unit 42a. Here, the transmission line design unit 42a specifies the transmission mode A on the basis of the selected configuration information (step Sd8).

The transmission line design unit 42a determines whether or not the specified transmission mode A satisfies the request in the connection request data (transmission distance) (step Sd9). Here, it is assumed that the transmission line design unit 42a determines that the specified transmission mode A satisfies the request in the connection request data. **In** this case, the transmission line design unit 42a generates transmission mode information including the selected configuration information and the connection source address information included in the connection request data. Thereafter, the transmission line design unit 42a notifies the connection node devices 1X and 1Y of the generated transmission mode information (step Sd10). For example, the transmission line design unit 42a notifies the connection node device 1X of the generated transmission mode information through the connection line 3X, and notifies the connection node device 1Y of the generated transmission mode information through the connection line 3Y.

The control unit 12X of the connection node device 1X receives the transmission mode information transmitted by the transmission line design unit 42a of the operation device 4a. The control unit 12X outputs the received transmission mode information to the connection information processing unit 13X. The connection information processing unit 13X generates an optical signal including the transmission mode information output from the control unit 12X. The connection information processing unit 13X outputs the generated optical signal to an output switching unit 11X through an optical fiber 92XR. The output switching unit 11X transmits the optical signal output from the connection information processing unit 13X to the optical fiber 51R via an optical fiber 91XR and a wavelength multiplexer unit 112X (step Sd11). In this manner, the connection node device 1X notifies the optical communication device 2X of the transmission mode information. The optical signal transmitted from the output switching unit 11X propagates through the optical fiber 51R and is input to the optical communication device 2X.

The control unit 12Y of the connection node device 1Y receives the transmission mode information transmitted by the transmission line design unit 42a of the operation device 4a. The control unit 12Y outputs the received transmission mode information to the connection information processing unit 13Y. The connection information processing unit 13Y generates an optical signal including the transmission mode information output from the control unit 12X. The connection information processing unit 13Y outputs the generated optical signal to an output switching unit 11Y through an optical fiber 92YR. The output switching unit 11Y transmits the optical signal output from the connection information processing unit 13Y to an optical fiber 53R via an optical fiber 91YR and a wavelength multiplexer unit 112Y (step Sd12). In this manner, the connection node device 1Y notifies the optical communication device 2aY of the transmission mode information. The optical signal transmitted from the output switching unit 11Y propagates through the optical fiber 53R and is input to the optical communication device 2aY.

The optical communication device 2X receives the optical signal propagated through the optical fiber 51R. The main signal transmission/reception unit 21X of the optical communication device 2X converts the received optical signal into an electrical signal to obtain a reception data signal. The main signal transmission/reception unit 21X reads the transmission mode information from the overhead area of the reception data signal. In a case where the connection source address information included in the read transmission mode information is not the address information assigned to the main signal transmission/reception unit 21X stored in the internal storage area, the main signal transmission/reception unit 21X discards the received transmission mode information. On the other hand, in a case where the address information included in the received transmission mode information matches the address information assigned to the main signal transmission/reception unit 21X, the main signal transmission/reception unit 21X sets the transmission mode indicated by the read transmission mode information (step Sd13).

The optical communication device 2aY receives the optical signal propagated through the optical fiber 53R. The main signal transmission/reception unit 21Y of the optical communication device 2aY converts the received optical signal into an electrical signal to obtain a reception data signal. The main signal transmission/reception unit 21Y reads the transmission mode information from the overhead area of the reception data signal. In a case where the connection source address information included in the read transmission mode information is not the address information assigned to the main signal transmission/reception unit 21Y stored in the internal storage area, the main signal transmission/reception unit 21Y discards the received transmission mode information. On the other hand, in a case where the address information included in the received transmission mode information matches the address information assigned to the main signal transmission/reception unit 21Y, the main signal transmission/reception unit 21Y sets the transmission mode indicated by the read transmission mode information (step Sd14).

After the notification of the transmission mode information, the control unit 12X of the connection node device 1X refers to the path information table and detects the identification information for specifying the optical transmission line 51 corresponding to the connection source address information included in the transmission mode information. Here, the control unit 12X detects the identification information for specifying the optical transmission line 51 corresponding to the address information of the main signal transmission/reception unit 21X. The control unit 12X performs switching processing of connecting the optical transmission line 51 and the optical transmission line 52 on the basis of the detected identification information for specifying the optical transmission line 51 and the identification information for specifying the optical transmission line 52. The control unit 12X outputs a switching instruction signal in which the connection destination of the optical fiber 51T is set to the optical fiber 52T and a switching instruction signal in which the connection destination of the optical fiber 51R is set to the optical fiber 52R to the output port switching unit 113X of the output switching unit 11X.

When the switching instruction signal is received from the control unit 12X, the output port switching unit 113X connects the optical fiber 51T and the optical fiber 52T and connects the optical fiber 51R and the optical fiber 52R (step Sd15). Thus, as illustrated in Fig. 8, the optical fiber 51T and the optical fiber 52T are connected via the output switching unit 11X, and the optical fiber 51R and the optical fiber 52R are connected via the output switching unit 11X.

After the notification of the transmission mode information, the control unit 12Y of the connection node device 1Y refers to the path information table and detects the identification information for specifying the optical transmission line 51 corresponding to the connection source address information included in the transmission mode information. Here, the control unit 12Y detects the identification information for specifying the optical transmission line 53 corresponding to the address information of the main signal transmission/reception unit 21Y. The control unit 12Y performs switching processing of connecting the optical transmission line 53 and the optical transmission line 52 on the basis of the detected identification information for specifying the optical transmission line 53 and the identification information for specifying the optical transmission line 52. The control unit 12Y outputs a switching instruction signal in which the connection destination of the optical fiber 53T is set to the optical fiber 52R and a switching instruction signal in which the connection destination of the optical fiber 53R is set to the optical fiber 52T to the output port switching unit 113Y of the output switching unit 11Y.

When the switching instruction signal is received from the control unit 12Y, the output port switching unit 113Y connects the optical fiber 53T and the optical fiber 52R and connects the optical fiber 53R and the optical fiber 52T (step Sd16). Thus, as illustrated in Fig. 8, the optical fiber 53T and the optical fiber 52R are connected via the output switching unit 11Y, and the optical fiber 53R and the optical fiber 52T are connected via the output switching unit 11Y. With the processing in steps Sd15 and d16, the main signal transmission/reception unit 21X of the optical communication device 2X and the main signal transmission/reception unit 21Y of the optical communication device 2aY are connected via the optical transmission line 51, the optical transmission line 52, and the optical transmission line 53.

### (Processing by optical transmission system of third embodiment)

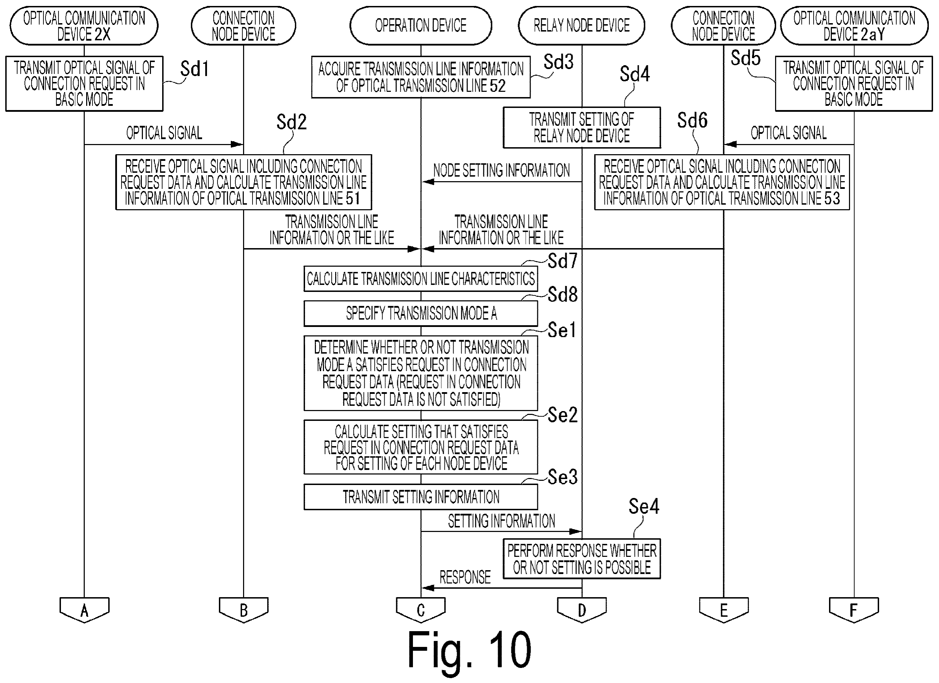

Figs. 9 and 10 are sequence diagrams illustrating a flow of processing performed by the optical transmission system 100a (second one) according to the third embodiment. Note that, in Figs. 9 and 10, processing in a case where the specified transmission mode does not satisfy the request will be described. In Figs. 9 and 10, the same processing steps as those in Fig. 8 are denoted by the same reference numerals as those used in Fig. 8, and the description thereof will be omitted.

After the processing in step Sd8, the transmission line design unit 42a determines whether or not the specified transmission mode A satisfies the request in the connection request data (transmission distance) (step Se1). Here, it is assumed that the transmission line design unit 42a determines that the specified transmission mode A does not satisfy the request in the connection request data. **In** this case, the transmission line design unit 42a calculates the setting that satisfies the request in the connection request data for each node device of the optical transmission line 52 (step Se2).

The transmission line design unit 42a generates setting information including the calculated setting contents of the node device, and transmits the generated setting information to the target node device (step Se3). For example, the transmission line design unit 42a generates setting information including the calculated setting contents of the filters 152 and 155 and optical amplifiers 151 and 154 included in the relay node device 10, and transmits the generated setting information to the relay node device 10 through the connection line 30.

The control unit 150 of the relay node device 10 receives the setting information transmitted from the operation device 4a. The control unit 150 determines whether or not the setting contents indicated by the received setting information can be set. The control unit 150 transmits a response indicating whether or not the setting contents can be set to the operation device 4a through the connection line 30 (step Se4).

The transmission line design unit 42a of the operation device 4a receives the response transmitted from the relay node device 10. The transmission line design unit 42a determines whether or not all the node devices can be set on the basis of the received response (step Se5). In a case where it is determined that not all the node devices can be set (step Se5-NO), the transmission line design unit 42a generates transmission mode information including information indicating that the connection request cannot be satisfied and connection source address information included in the connection request data. Thereafter, the transmission line design unit 42a notifies the connection node devices 1X and 1Y of the generated transmission mode information (step Se6).

On the other hand, in a case where it is determined that all the node devices can be set (step Se5-YES), the transmission line design unit 42a transmits node control information including an adjustment instruction to each of the node devices located on the optical transmission line 52 (step Se7). At this time, the transmission line design unit 42a is only required to transmit the node control information to the node device that requires the adjustment of the setting of at least one of the optical amplifier or the filter among the node devices located on the optical transmission line 52.

The control unit 150 of the relay node device 10 receives the node setting information transmitted from the transmission line design unit 42a. The control unit 150 adjusts the setting of the relay node device 10 according to the received node setting information (step Se8). Specifically, the control unit 150 adjusts the settings of the optical amplifiers 151 and 154 and the filters 152 and 155 included in the relay node device 10 to the settings indicated by the setting contents transmitted from the operation device 4a. Thus, the optical amplifiers 151 and 154 and the filters 152 and 155 included in the relay node device 10 are set to satisfy the request in the connection request data.

It is assumed that after the processing in step Se7, the transmission line design unit 42a specifies the transmission mode B as a new transmission mode. The transmission line design unit 42a generates transmission mode information including configuration information in the specified transmission mode B and connection source address information included in the connection request data. Thereafter, the transmission line design unit 42a notifies the connection node devices 1X and 1Y of the generated transmission mode information (step Se9). For example, the transmission line design unit 42a notifies the connection node device 1X of the generated transmission mode information through the connection line 3X, and notifies the connection node device 1Y of the generated transmission mode information through the connection line 3Y. Thereafter, the processing in step Sd11 to step Sd16 is executed.

In the optical transmission system 100a according to the third embodiment configured as described above, it is possible to obtain the same effects as those of the first embodiment even when the optical path between the optical communication devices 2X and 2aY located outside the carrier network is set.

### (Modification example of third embodiment)

The relay node device 10 may be configured to perform processing similar to that of the second embodiment in a case where the setting information transmitted from the operation device 4a is received. Specifically, in a case where the setting information transmitted from the operation device 4a is received, the relay node device 10 determines whether or not the setting contents indicated by the received setting information can be set. For example, the relay node device 10 determines whether or not the setting contents indicated by the received setting information can be set in the filters 152 and 155, and the optical amplifiers 151 and 154. In a case where the setting of the setting contents indicated by the setting information is impossible, the relay node device 10 transmits a response including the content indicating that the setting is impossible and the specification information that can be set by the relay node device 10 to the operation device 4a through the connection line 30. On the other hand, in a case where the setting of the setting contents indicated by the setting information is possible, the relay node device 10 transmits the response including the content indicating that the setting is possible to the operation device 4a through the connection line 30. The transmission line design unit 42a of the operation device 4a calculates the setting of the relay node device 10 again on the basis of the specification information included in the received response. Thereafter, the processing in steps Sc5, Sc6, and Sc7 in the second embodiment is performed.

### (Fourth embodiment)

In a fourth embodiment, a configuration will be described in which an operator of the communication company determines a transmission mode to be used between the optical communication devices to perform communication in advance, and the operation device adjusts the setting of the node device in order to increase the transmission margin.

A system configuration in the fourth embodiment is similar to that in the first embodiment. Since the processing of the operation device 4 is different from that of the first embodiment, the following difference will be mainly described. Note that, also in the second embodiment, a configuration in which the operation device 4 adjusts the setting of the relay node device 10 which is the node device will be described.

The transmission line design unit 42 of the operation device 4 in the fourth embodiment determines whether or not the transmission mode determined by the operator has a sufficient transmission margin. In a case where it is determined that the transmission mode determined by the operator has a sufficient transmission margin, the transmission line design unit 42 determines the transmission mode to be used for the communication of the optical communication devices 2X and 2Y to be the transmission mode determined by the operator.

On the other hand, in a case where it is determined that the transmission mode determined by the operator does not have the sufficient transmission margin, the transmission line design unit 42 operates to change the setting of the filter or the optical amplifier included in the node device provided in the carrier network.

### (Processing by optical transmission system of fourth embodiment)

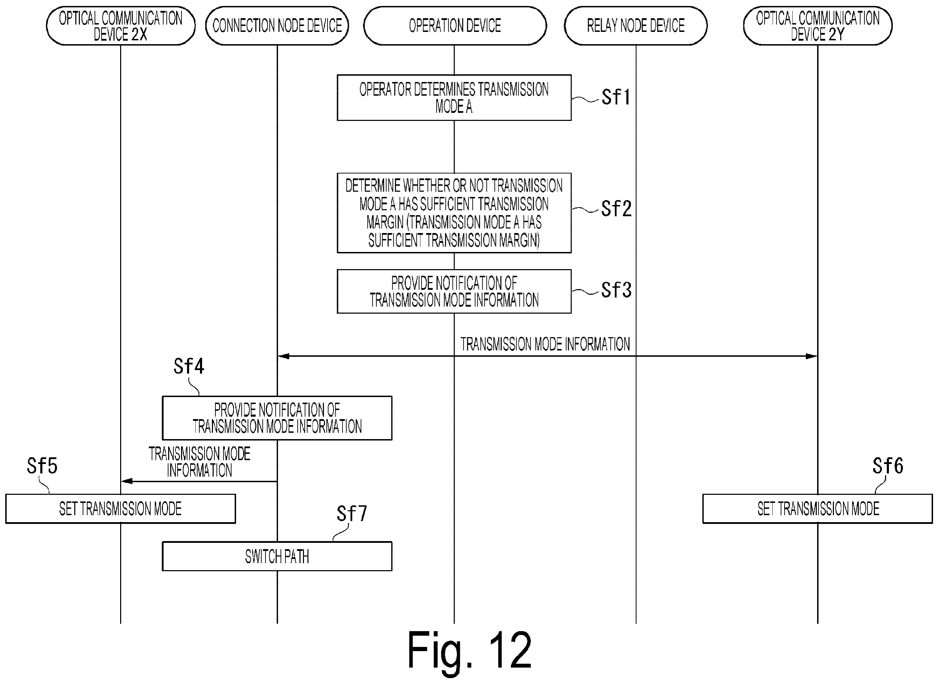

Fig. 12 is a sequence diagram illustrating a flow of processing performed by the optical transmission system 100 (first one) according to the fourth embodiment. Note that, in Fig. 12, processing in a case where the specified transmission mode satisfies the request will be described. Note that at the start of the processing in Fig. 12, the output port switching unit 113 of the connection node device 1 sets the connection destination of the optical transmission line 51 to the connection information processing unit 13 included in the connection node device 1 in the initial state. Note that, in Fig. 12, it is assumed that the connection request data from the optical communication device 2X is separately received by the operation device 4.

It is assumed that the operator determines the transmission mode A as the transmission mode to be used in the optical communication device 2X and the optical communication device 2Y. The operator operates the operation device 4 to set the transmission mode A. Thus, the transmission line design unit 42 determines the transmission mode A as the transmission mode to be used in the optical communication device 2X and the optical communication device 2Y (step Sf1). The transmission line design unit 42 determines whether or not the determined transmission mode A has a sufficient transmission margin (step Sf2). Here, it is assumed that the transmission line design unit 42 determines that the transmission mode A has the sufficient transmission margin.

In this case, the transmission line design unit 42 generates transmission mode information including the configuration information corresponding to the transmission mode A and the connection source address information. Thereafter, the transmission line design unit 42 notifies the connection node device 1 and the optical communication device 2Y of the generated transmission mode information (step Sf3). For example, the transmission line design unit 42 notifies the connection node device 1 of the generated transmission mode information through the connection line 3, and notifies the optical communication device 2Y of the generated transmission mode information through the connection line 3-1.

The control unit 12 of the connection node device 1 receives the transmission mode information transmitted by the transmission line design unit 42 of the operation device 4. The control unit 12 outputs the received transmission mode information to the connection information processing unit 13. The connection information processing unit 13 generates an optical signal including the transmission mode information output from the control unit 12.

The connection information processing unit 13 outputs the generated optical signal to the output switching unit 11 through the optical fiber 92R. The output switching unit 11 transmits the optical signal output from the connection information processing unit 13 to the optical fiber 51R via the optical fiber 91R and the wavelength multiplexer unit 112 (step Sf4). In this manner, the connection node device 1 notifies the optical communication device 2X of the transmission mode information. The optical signal transmitted from the output switching unit 11 propagates through the optical fiber 51R and is input to the optical communication device 2X.

The optical communication device 2X receives the optical signal propagated through the optical fiber 51R. The main signal transmission/reception unit 21X of the optical communication device 2X converts the received optical signal into an electrical signal to obtain a reception data signal. The main signal transmission/reception unit 21X reads the transmission mode information from the overhead area of the reception data signal. In a case where the connection source address information included in the read transmission mode information is not the address information assigned to the main signal transmission/reception unit 21X stored in the internal storage area, the main signal transmission/reception unit 21X discards the received transmission mode information. On the other hand, in a case where the address information included in the received transmission mode information matches the address information assigned to the main signal transmission/reception unit 21X, the main signal transmission/reception unit 21X sets the transmission mode indicated by the read transmission mode information (step Sf5).

The control unit 20Y of the optical communication device 2Y receives the transmission mode information transmitted through the connection line 3-1. In a case where the connection source address information included in the received transmission mode information is not the address information assigned to the main signal transmission/reception unit 21Y stored in the internal storage area, the control unit 20Y discards the transmission mode information. On the other hand, in a case where the address information included in the received transmission mode information matches the address information assigned to the main signal transmission/reception unit 21Y, the control unit 20Y outputs the transmission mode information to the main signal transmission/reception unit 21Y. The main signal transmission/reception unit 21Y sets the transmission mode indicated by the transmission mode information (step Sf6).

After the notification of the transmission mode information, the control unit 12 of the connection node device 1 refers to the path information table and detects the identification information for specifying the optical transmission line 51 corresponding to the connection source address information included in the transmission mode information. Here, the control unit 12 detects the identification information for specifying the optical transmission line 51 corresponding to the address information of the main signal transmission/reception unit 21X. The control unit 12 performs switching processing of connecting the optical transmission line 51 and the optical transmission line 52 on the basis of the detected identification information for specifying the optical transmission line 51 and the identification information for specifying the optical transmission line 52. The control unit 12 outputs a switching instruction signal in which the connection destination of the optical fiber 51T is set to the optical fiber 52T and a switching instruction signal in which the connection destination of the optical fiber 51R is set to the optical fiber 52R to the output port switching unit 113 of the output switching unit 11.

When the switching instruction signal is received from the control unit 12, the output port switching unit 113 connects the optical fiber 51T and the optical fiber 52T and connects the optical fiber 51R and the optical fiber 52R (step Sf7). Thus, the optical fiber 51T and the optical fiber 52T are connected via the output switching unit 11, and the optical fiber 51R and the optical fiber 52R are connected via the output switching unit 11. Therefore, the main signal transmission/reception unit 21X of the optical communication device 2X and the main signal transmission/reception unit 21Y of the optical communication device 2Y are connected via the optical transmission line 51 and the optical transmission line 52.

### (Processing by optical transmission system of fourth embodiment)

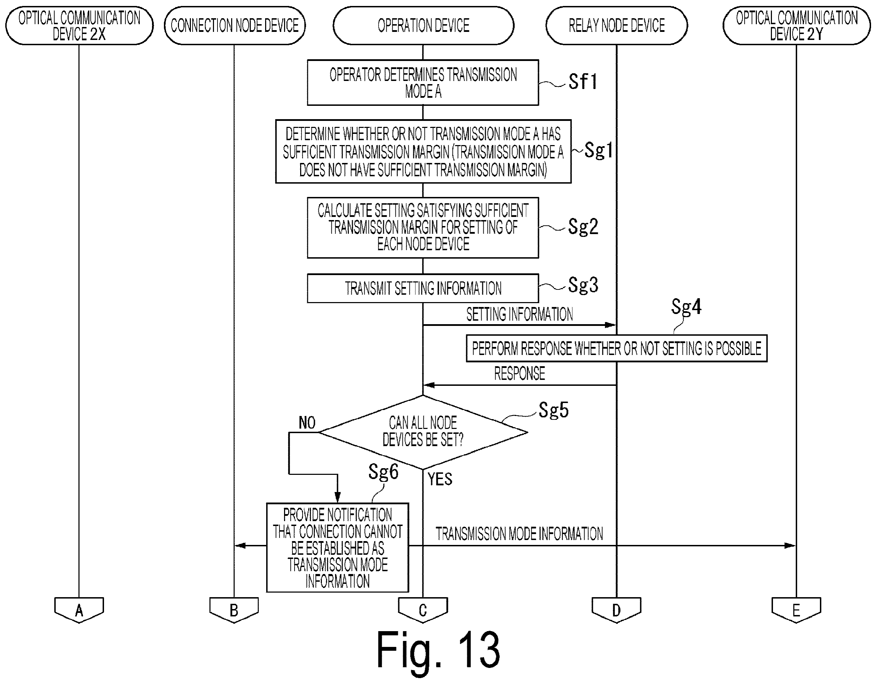

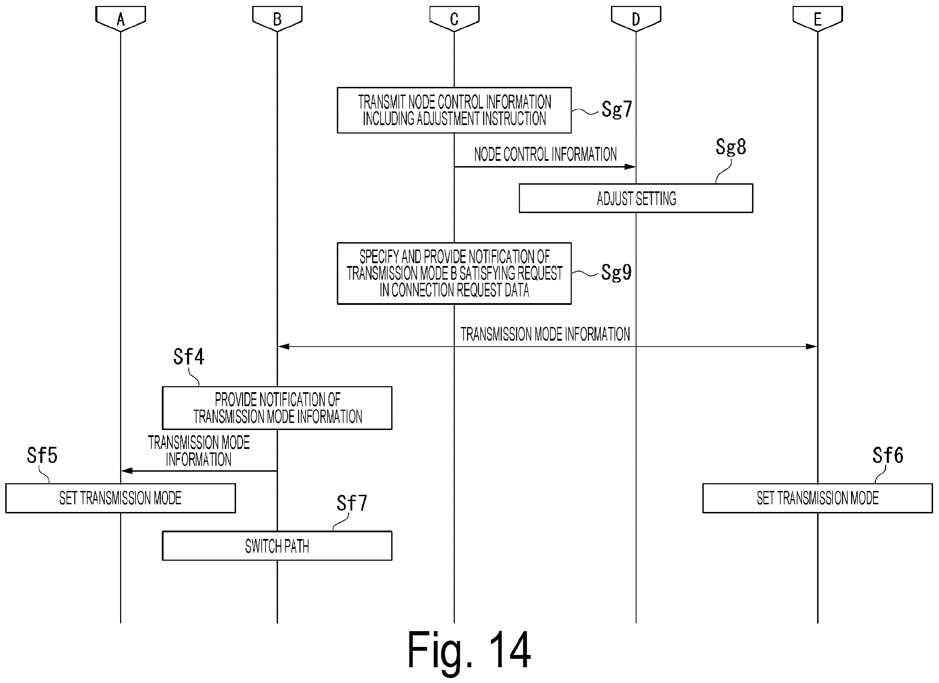

Figs. 13 and 14 are sequence diagrams illustrating a flow of processing performed by the optical transmission system 100 (second one) according to the fourth embodiment. Note that, in Figs. 13 and 14, processing in a case where the specified transmission mode does not satisfy the request will be described. In Figs. 13 and 14, the same processing steps as those in Fig. 12 are denoted by the same reference numerals as those used in Fig. 12, and the description thereof will be omitted. Note that, in Figs. 13 and 14, it is assumed that the connection request data from the optical communication device 2X is separately received by the operation device 4.

After the processing in step Sf1, the transmission line design unit 42 determines whether or not the determined transmission mode A has a sufficient transmission margin (step Sg1). Here, it is assumed that the transmission line design unit 42 determines that the transmission mode A does not have the sufficient transmission margin. In this case, the transmission line design unit 42 calculates the setting that satisfies the sufficient transmission margin for each node device of the optical transmission line 52 (step Sg2).

Note that the setting that satisfies the sufficient transmission margin calculated by the transmission line design unit 42 is the setting of the filter or the optical amplifier as described above. Then, a node device that does not include at least one of the optical amplifier or the filter is excluded from the target of the calculation of the setting that satisfies the request in the connection request data. In the description of the present example, the node device including at least one of the optical amplifier or the filter is only the relay node device 10. Then, the transmission line design unit 42 calculates the setting that satisfies the sufficient transmission margin for the filters 152 and 155 and optical amplifiers 151 and 154 included in the relay node device 10. The transmission line design unit 42 generates setting information including the calculated setting contents of the node device, and transmits the generated setting information to the target node device (step Sg3). For example, the transmission line design unit 42 generates setting information including the calculated setting contents of the filters 152 and 155 and optical amplifiers 151 and 154 included in the relay node device 10, and transmits the generated setting information to the relay node device 10 through the connection line 30.

The control unit 150 of the relay node device 10 receives the setting information transmitted from the operation device 4. The control unit 150 determines whether or not the setting contents indicated by the received setting information can be set. The control unit 150 transmits a response indicating whether or not the setting contents can be set to the operation device 4 through the connection line 30 (step Sg4).

The transmission line design unit 42 of the operation device 4 receives the response transmitted from the relay node device 10. The transmission line design unit 42 determines whether or not all the node devices can be set on the basis of the received response (step Sg5). In a case where it is determined that not all the node devices can be set (step Sg5-NO), the transmission line design unit 42 generates transmission mode information including information indicating that the connection cannot be established and connection source address information. Thereafter, the transmission line design unit 42 notifies the connection node device 1 and the optical communication device 2Y of the generated transmission mode information (step Sg6).

On the other hand, in a case where it is determined that all the node devices can be set (step Sg5-YES), the transmission line design unit 42 transmits node control information including an adjustment instruction to each of the node devices located on the optical transmission line 52 (step Sg7). At this time, the transmission line design unit 42 is only required to transmit the node control information to the node device that requires the adjustment of the setting of at least one of the optical amplifier or the filter among the node devices located on the optical transmission line 52. In the example described here, the transmission line design unit 42 transmits the node control information to the relay node device 10. The adjustment instruction is an instruction to change the current setting in the optical amplifier or the filter of the node device to the setting indicated by the setting information.

The control unit 150 of the relay node device 10 receives the node setting information transmitted from the transmission line design unit 42. The control unit 150 adjusts the setting of the relay node device 10 according to the received node setting information (step Sg8). Specifically, the control unit 150 adjusts the settings of the optical amplifiers 151 and 154 and the filters 152 and 155 included in the relay node device 10 to the settings indicated by the setting contents transmitted from the operation device 4. Thus, the optical amplifiers 151 and 154 and the filters 152 and 155 included in the relay node device 10 are set to satisfy the request in the connection request data.

It is assumed that after the processing in step Sg7, the transmission line design unit 42 specifies the transmission mode B as a new transmission mode. The transmission line design unit 42 generates transmission mode information including configuration information in the specified transmission mode B and connection source address information. Thereafter, the transmission line design unit 42 notifies the connection node device 1 and the optical communication device 2Y of the generated transmission mode information (step Sg9). For example, the transmission line design unit 42 notifies the connection node device 1 of the generated transmission mode information through the connection line 3, and notifies the optical communication device 2Y of the generated transmission mode information through the connection line 3-1. Thereafter, the processing in step Sf4 to step Sf7 is executed.

In the optical transmission system 100 according to the fourth embodiment configured as described above, the operation device 4 includes the transmission line design unit 42 that specifies the transmission mode (for example, the transmission mode A) used for communication of the optical communication device 2X in response to the instruction of the operator, calculates the settings of at least the filters 152 and 155 included in the relay node device 10 in a case where the specified transmission mode does not have the sufficient transmission margin, and notifies the relay node device 10 of the node control information including the calculated settings of the filters 152 and 155. The operation device 4 adjusts the relay node device 10 to increase the transmission margin at the time of setting the optical path. In this manner, in addition to the optimization of the transmission mode of the optical communication device 2X, the transmission line is optimized. Therefore, at the time of setting an end-to-end optical path including the optical communication device 2X located outside the carrier network, it is possible to optimize the setting of the relay node device 10 which is a node device through which the optical path passes.

### (Modification example of fourth embodiment)

The relay node device 10 may be configured to perform processing similar to that of the second embodiment in a case where the setting information transmitted from the operation device 4 is received. Specifically, in a case where the setting information transmitted from the operation device 4 is received, the relay node device 10 determines whether or not the setting contents indicated by the received setting information can be set. For example, the relay node device 10 determines whether or not the setting contents indicated by the received setting information can be set in the filters 152 and 155, and the optical amplifiers 151 and 154. In a case where the setting of the setting contents indicated by the setting information is impossible, the relay node device 10 transmits a response including the content indicating that the setting is impossible and the specification information that can be set by the relay node device 10 to the operation device 4 through the connection line 30. On the other hand, in a case where the setting of the setting contents indicated by the setting information is possible, the relay node device 10 transmits the response including the content indicating that the setting is possible to the operation device 4 through the connection line 30. The transmission line design unit 42 of the operation device 4 calculates the setting of the relay node device 10 again on the basis of the specification information included in the received response. Thereafter, the processing in steps Sc5, Sc6, and Sc7 in the second embodiment is performed.

### (First modification example in first to fourth embodiments)

In each of the above-described embodiments, the main signal transmission/reception unit 21X transmits the connection request data in the basic mode. However, in the optical communication device 2X, the control signal transmission/reception unit 80X may transmit a control signal including the connection request data in the basic mode. In this configuration, the control unit 20X outputs the connection request instruction signal to the monitoring management processing unit 75X, and the monitoring management processing unit 75X outputs the connection request instruction signal to the control signal transmission/reception unit 80X. When receiving the connection request instruction signal from the control unit 20X, the control signal transmission/reception unit 80X generates connection request data similarly to the main signal transmission/reception unit 21X. At this time, the information included in the connection request data is the same as the information included in the connection request data generated by the main signal transmission/reception unit 21X.

In this configuration, the control signal including the connection request data transmitted from the control signal transmission/reception unit 80X is demultiplexed from the main signal by the wavelength demultiplexer unit 111 of the output switching unit 11. As a result, the control signal including the connection request data transmitted from the optical communication device 2X is transferred to the operation device 4 via the control signal transmission/reception unit 14 and the control unit 12.

Note that, similarly in the optical communication device 2aY in the third embodiment, the control signal transmission/reception unit 80Y may be configured to transmit the control signal including the connection request data in the basic mode.

### (Second modification example of first to fourth embodiments)

In a case where the communication in the basic mode is used in the optical communication device 2X, the transmission mode or the communication start may be set to the optical communication device 2X separately using the control signals from the connection node devices 1 and 1X. Furthermore, the connection request data may be exchanged using the control signal, and the connection node devices 1 and 1X may acquire the transmission line information of the optical transmission line 51 using an OSNR measurement device disposed therein.

In the third embodiment, in a case where the communication in the basic mode is used in the optical communication device 2aY, the transmission mode or the communication start may be set to the optical communication device 2aY separately using the control signal from the connection node device 1Y. Furthermore, the connection request data may be exchanged using the control signal, and the connection node device 1Y may acquire the transmission line information of the optical transmission line 53 using the OSNR measurement device disposed therein.

### (Third modification example of first to fourth embodiments)

In the above-described embodiments, the relay node device 10 includes the filter and the optical amplifier. However, in the above-described embodiments, a node device other than the relay node device 10 in the carrier network may also include the filter and the optical amplifier. In this case, the operation devices 4 and 4a calculate the settings of the filter and the optical amplifier included in the node device other than the relay node device 10 in the carrier network similarly to the filter and the optical amplifier included in the relay node device 10. Here, the node devices other than the relay node device 10 in the carrier network are the connection node devices 1, 1X, and 1Y and the optical communication device 2Y as described above.

Note that, in the embodiments, in a case where there is a node device on the optical transmission line 51 and the node device can be controlled by each of the operation devices 4 and 4a, the node device located on the optical transmission line 51 may be regarded as the node device in the carrier network. In this case, the operation devices 4 and 4a calculate the settings of the filter and the optical amplifier included in the node device located on the optical transmission line 51 similarly to the filter and the optical amplifier included in the relay node device 10.

Note that, in the third embodiment, in a case where there is a node device on the optical transmission line 53 and the node device can be controlled by the operation device 4a, the node device located on the optical transmission line 53 may be regarded as the node device in the carrier network. In this case, the operation device 4a calculates the settings of the filter and the optical amplifier included in the node device located on the optical transmission line 53 similarly to the filter and the optical amplifier included in the relay node device 10.

### (Fourth modification example of first to fourth embodiments)

The optical communication devices 2X, 2Y, and 2aY may include a monitor for monitoring the input optical signal. The monitor is, for example, a spectrum monitor or a power monitor.

### (Fifth modification example of first to fourth embodiments)

The wavelength (wavelength of the control signal) of the control signal transmission/reception unit 80X of the optical communication device 2X may be amplified by the optical amplifier as a wavelength close to the wavelength of the main signal. At this time, in a case where there is a concern about an influence on the main signal, the wavelength band of the main signal and the wavelength band of the control signal may be changed. For example, the band may be changed such that the C-band is used for the main signal and the O-band is used for the control signal.

### (Sixth modification example of first to fourth embodiments)

When determining the transmission mode and the setting of the node device, the transmission line design units 42 and 42a may select the setting for minimizing the frequency band to be used, or may select the setting with a large margin, that is, the setting for obtaining an OSNR larger than the OSNR that can be transmitted.

### (Seventh modification example of first to fourth embodiments)

In the above-described embodiments, the transmission line design units 42 and 42a included in the operation devices 4 and 4a optimize the setting of the relay node device 10 in addition to the optimization of the transmission modes of the optical communication devices 2X, 2Y, and 2aY. However, the functions of optimizing the transmission modes of the optical communication devices 2X, 2Y, and 2aY and optimizing the setting of the relay node device 10 may be included in the connection node devices 1, 1X, and 1Y. In this case, the connection node devices 1 and 1X may calculate the transmission line information of the optical transmission line 52 in advance by predetermined calculation on the basis of the optical signal transmitted through the optical transmission line 52 constituting the carrier network and store the calculated transmission line information in the internal storage area, or may acquire the transmission line information from the external device or the operation device 4 on demand at a specific timing when a network is installed.

In this configuration, in the first embodiment, the connection node device 1 includes the transmission line design unit having the function of the transmission line design unit 42 that performs the processing in step Sa5 to step Sa8. Furthermore, in the first embodiment, the connection node device 1 includes the transmission line design unit having the function of the processing performed by the transmission line design unit 42 in the processing in step Sb1 to step Sb9.

In this configuration, in the second embodiment, the connection node device 1 includes the transmission line design unit having the function of the transmission line design unit 42 that performs the processing in step Sa5 to step Sa6, the processing in step Sb1 to step Sb3, the processing in step Sb7 to step Sb9, and the processing in step Sc1 to step Sc7.

In this configuration, in the third embodiment, any one of the connection node devices 1X and 1Y includes the transmission line design unit having the function of the transmission line design unit 42a that performs the processing in step Sd7 to step Sd10. Furthermore, in the third embodiment, any one of the connection node devices 1X and 1Y includes the transmission line design unit having the function of the processing performed by the transmission line design unit 42a in the processing in step Se1 to step Se9.

In this configuration, in the fourth embodiment, the connection node device 1 includes the transmission line design unit having the function of the transmission line design unit 42 that performs the processing in step Sf1 to step Sf3. Furthermore, in the fourth embodiment, the connection node device 1 includes the transmission line design unit having the function of the processing performed by the transmission line design unit 42 in the processing in step Sg1 to step Sg9.

### (Use cases in first to fourth embodiments)

Any of the above-described embodiments can be used in the following use cases.

### (First use case)

At the time of initial setting (provisioning) of the optical path, signal quality deterioration (deterioration of Rx (reception) OSNR) due to GNPy estimation or the like of the transmission line design units 42 and 42a of the operation devices 4 and 4a is detected and used to compensate for the deterioration.

### (Second use case)

Filter settings of the node device and the optical communication devices 2X and 2aY are acquired by the initial setting of the optical path, a shift in the center frequency and pass band of the filter is detected, and the filter settings are aligned.

### (Third use case)

When the transmission mode with the high baud rate is used to increase the bit rate in the initial setting of the optical path, the bandwidth of the optical signal is increased due to the increase in the baud rate, and thus the transmission mode is used in a case where it is necessary to set the filter bandwidth of the node or the like.

### (Fourth use case)

A monitor (spectrum monitoring function) detects signal spectrum deterioration and deterioration of RxOSNR, which are caused by the shift of the center wavelength of a laser due to aging deterioration, and the monitor is used to compensate for the deterioration. In order to determine in which node device's filter the signal spectrum deterioration occurs, the operation devices 4 and 4a may acquire the spectrum waveform from the monitor of each node device. In this case, the transmission line design units 42 and 42a calculate a set value of the filter included in each of the node devices on the basis of the spectrum waveform obtained from the monitor of each node device.

### (Fifth use case)

When the optical path is constructed in arbitrary transmission modes of the optical communication devices 2X, 2Y, and 2aY in initial setting of the optical path, the RxOSNR is further improved and used to increase the transmission margin.

The control units 12X, 20X, 12Y, 20Y, and 150 and the operation devices 4 and 4a in the above-described embodiments may be implemented by a computer. In this case, a program for implementing this function may be recorded in a computer-readable recording medium, and the program recorded in the recording medium may be read and executed by a computer system to implement this function. Note that "computer system" herein includes hardware such as an operating system (OS) and peripheral devices. Furthermore, the "computer-readable recording medium" refers to a portable medium such as a flexible disk, a magneto-optical disk, a read only memory (ROM), or a CD-ROM, or a storage device such as a hard disk included in the computer system. Moreover, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside the computer system serving as a server or a client in that case. Furthermore, the program described above may be for implementing some of the functions described above, may be implemented in a combination of the functions described above and a program already recorded in the computer system, or may be implemented using a programmable logic device such as a field programmable gate array (FPGA).

Although the embodiments of the present invention have been described in detail with reference to the drawings, specific configurations are not limited to the embodiments, and include design and the like within the scope of the present invention without departing from the gist of the present invention.

### Industrial Applicability

This can be used when an optical path passing through a plurality of optical transmission lines is set.

### Reference Signs List

1, 1X, 1Y Connection node device
2X, 2Y, 2aY Optical communication device
3, 3X, 3Y, 3-1, 30 Connection line
4, 4a Operation device
6X, 6Y Control signal multiplexer/demultiplexer unit
7X, 7Y, 111, 111X, 111Y Wavelength demultiplexer unit
8X, 8Y, 112, 112X, 112Y Wavelength multiplexer unit
10 Relay node device
11, 11X, 11Y Output switching unit
12, 12X, 12Y, 20X, 20Y Control unit
13, 13X, 13Y Connection information processing unit
14, 14X, 14Y, 80X, 80Y Control signal transmission/reception unit
21X, 21YMain signal transmission/reception unit
41 Path detection unit
42, 42a Transmission line design unit
51T, 51R, 52T, 52R, 53T, 53R, 90T, 90R, 90XT, 90XR, 90YT, 90YR, 91T, 91R, 91XT, 91XR,
91YT, 91YR, 92T, 92R, 92XT, 92XR, 92YT, 92YR Optical fiber
75X, 75YMonitoring management processing unit
90 Control signal internal optical line
91 Main signal internal optical line
92 Connection processing internal optical line
100, 100aOptical transmission system
113, 113X, 113Y Output port switching unit
150 Control unit
151, 154 Optical amplifier
152, 155 Filter
153, 156 Branch unit
157 Monitor

## Claims

1. An optical transmission system comprising:
a plurality of node devices provided in a carrier network;
a control device configured to control the plurality of node devices;
a user-side optical communication device provided outside the carrier network;
a first optical transmission line configured to connect the user-side optical communication device and at least one node device of the plurality of node devices; and
a second optical transmission line configured to connect the plurality of node devices, wherein the at least one node device of the plurality of node devices includes one or more filters configured to perform filter processing on an optical signal, and
a control unit configured to adjust a setting of the one or more filters in response to an instruction transmitted from the control device, and
the control device includes
a transmission line design unit configured to specify a first transmission mode to be used for communication of the user-side optical communication device in response to a request in connection request data or an instruction of an operator, calculates the setting of at least the one or more filters included in the at least one node device of the plurality of node devices in a case where the specified first transmission mode does not satisfy the request in the connection request data or a higher request condition than the request in the connection request data, and notifies the at least one node device of the plurality of node devices of node control information including the calculated setting of the one or more filters.

2. The optical transmission system according to claim 1,
wherein the transmission line design unit
specifies the first transmission mode that satisfies the request in the connection request data in terms of a transmission capacity, determines the first transmission mode as a transmission mode to be used for communication of the user-side optical communication device in a case where the specified first transmission mode satisfies the request in the connection request data or a transmission distance indicated by a higher request condition than the request in the connection request data, and calculates the setting of at least the one or more filters included in the at least one node device of the plurality of node devices in a case where the specified first transmission mode does not satisfy the request in the connection request data or the transmission distance indicated by the higher request condition than the request in the connection request data.

3. The optical transmission system according to claim 1 or 2,
wherein the transmission line design unit
further determines a second transmission mode configured to satisfy the request in the connection request data in a case where the specified first transmission mode does not satisfy the request in the connection request data or a higher request condition than the request in the connection request data.

4. The optical transmission system according to claim 1 or 2,
wherein the control unit of the at least one node device transmits specification information that is capable of being set in the one or more filters to the control device in a case where setting contents included in the node control information transmitted from the control device are not capable of being set, and
the transmission line design unit of the control device recalculates the setting of at least the one or more filters included in the at least one node device of the plurality of node devices on a basis of the specification information that is capable of being set in the one or more filters, the specification information being transmitted from the at least one node device.

5. The optical transmission system according to claim 1 or 2, further comprising a third optical transmission line that connects the at least one node device of the plurality of node devices and an opposing device provided outside the carrier network, the opposing device with which the user-side optical communication device requests connection,
wherein the transmission line design unit specifies the first transmission mode to be used for communication between the user-side optical communication device and the opposing device according to the request in the connection request data transmitted from the opposing device provided outside the carrier network that requests connection with the user-side optical communication device and the request in the connection request data transmitted from the user-side optical communication device, and calculates the setting of at least the one or more filters included in the at least one node device of the plurality of node devices in a case where the specified first transmission mode does not satisfy each request in the connection request data.

6. The optical transmission system according to claim 1,
wherein the transmission line design unit calculates the setting of at least the one or more filters included in the at least one node device of the plurality of node devices satisfying the request condition in a case where the first transmission mode specified in response to the instruction of the operator does not satisfy a higher request condition than the request in the connection request data.

7. A control device in an optical transmission system including a plurality of node devices provided in a carrier network, the control device that controls the plurality of node devices, a user-side optical communication device provided outside the carrier network, a first optical transmission line that connects the user-side optical communication device and at least one node device of the plurality of node devices, and a second optical transmission line that connects the plurality of node devices, the control device comprising
a transmission line design unit configured to specify a first transmission mode to be used for communication of the user-side optical communication device in response to a request in connection request data or an instruction of an operator, calculates a setting of at least the one or more filters included in the at least one node device of the plurality of node devices in a case where the specified first transmission mode does not satisfy the request in the connection request data or a higher request condition than the request in the connection request data, and notifies the at least one node device of the plurality of node devices of node control information including the calculated setting of the one or more filters.

8. A control method in an optical transmission system including a plurality of node devices provided in a carrier network, a control device that controls the plurality of node devices, a user-side optical communication device provided outside the carrier network, a first optical transmission line that connects the user-side optical communication device and at least one node device of the plurality of node devices, and a second optical transmission line that connects the plurality of node devices, the control method comprising:
by the at least one node device of the plurality of node devices, adjusting a setting of one or more filters that perform filter processing on an optical signal in response to an instruction transmitted from the control device; and
by the control device, specifying a first transmission mode to be used for communication of the user-side optical communication device in response to a request in connection request data or an instruction of an operator, calculating the setting of at least the one or more filters included in the at least one node device of the plurality of node devices in a case where the specified first transmission mode does not satisfy the request in the connection request data or a higher request condition than the request in the connection request data, and notifying the at least one node device of the plurality of node devices of node control information including the calculated setting of the one or more filters.
